(19) Europäisches Patentamt
European Patent Office
Office européen des brevets

(11) EP 4 672 411 A1

(12) EUROPEAN PATENT APPLICATION
published in accordance with Art. 153(4) EPC

(43) Date of publication:
**31.12.2025 Bulletin 2026/01**

(21) Application number: **24785308.8**

(22) Date of filing: **05.04.2024**

(51) International Patent Classification (IPC):
***H01M 10/0567*** *(2010.01)* ***H01M 10/0568*** *(2010.01)*
***H01M 10/0569*** *(2010.01)* ***H01M 10/052*** *(2010.01)*
***H01M 4/38*** *(2006.01)* ***H01M 4/48*** *(2010.01)*
***H01M 4/134*** *(2010.01)*

(52) Cooperative Patent Classification (CPC):
**H01M 10/0567; H01M 4/386; H01M 10/052; H01M 10/0525; H01M 10/0568; H01M 10/0569;**
H01M 2300/0034; H01M 2300/0037; Y02E 60/10

(86) International application number:
**PCT/KR2024/004504**

(87) International publication number:
**WO 2024/210609 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.04.2023 KR 20230046365**
**15.12.2023 KR 20230183781**

(71) Applicant: **LG Energy Solution, Ltd.**
**Seoul 07335 (KR)**

(72) Inventors:
- **CHO, Yoon Gyo**
  **Daejeon 34122 (KR)**
- **LEE, Jung Min**
  **Daejeon 34122 (KR)**
- **LEE, Chul Haeng**
  **Daejeon 34122 (KR)**
- **LEE, Kyung Mi**
  **Daejeon 34122 (KR)**
- **BAEK, Ga Young**
  **Daejeon 34122 (KR)**
- **JI, Su Hyeon**
  **Daejeon 34122 (KR)**
- **YEOM, Chul Eun**
  **Daejeon 34122 (KR)**

(74) Representative: **Hoffmann Eitle**
**Patent- und Rechtsanwälte PartmbB**
**Arabellastraße 30**
**81925 München (DE)**

# (54) NONAQUEOUS ELECTROLYTE AND SECONDARY LITHIUM BATTERY COMPRISING SAME

(57) The present disclosure relates to a non-aqueous electrolyte including lithium salts, an organic solvent, and an additive including a first additive and a second additive. Each of the first additive and the second additive includes a compound represented by a specific Formula.



Processed by Luminess, 75001 PARIS (FR)

## Description

### TECHNICAL FIELD

Cross-reference to related applications

This application is based on and claims priorities from Korean Patent Application No. 10-2023-0046365 filed on April 7, 2023 and Korean Patent Application No. 10-2023-0183781 filed on December 15, 2023, with the Korean Intellectual Property Office, the disclosure of which is incorporated herein in its entirety by reference.

Technical field

The present disclosure relates to non-aqueous electrolytes and lithium secondary batteries including the same.

### BACKGROUND ART

As personal IT devices and computer networks advances due to the development of information society, and the overall society's dependence on electrical energy increases correspondingly, the development of technologies to efficiently store and utilize electrical energy is required.

Among developed technologies related to electrical energy, secondary batteries (also known as rechargeable batteries) are one of the most suitable technologies for various purposes. Among the secondary batteries, interests in lithium secondary batteries are growing because the lithium secondary batteries have relatively high energy density while capable of being miniaturized to the extent that they can be applied to personal IT devices.

Generally, lithium secondary batteries are manufactured by injecting or impregnating a non-aqueous electrolyte into an electrode assembly including a positive electrode, a negative electrode, and a porous separator.

As a positive electrode active material for these lithium secondary batteries, the use of lithium-containing cobalt oxide, $LiMnO_2$ with a layered crystal structure, $LiMn_2O_4$ with a spinel crystal structure, lithium-containing nickel oxide ($LiNiO_2$), and lithium nickel-cobalt-manganese transition metal oxide is considered.

Meanwhile, carbon-based active materials such as graphite and the like have been used as negative electrode active materials, but recently, the use of silicon-based active materials is also considered in that the silicon-based active materials have higher capacity compared to carbon-based active materials.

### DISCLOSURE OF THE INVENTION

Technical problem

The present disclosure provides a non-aqueous electrolyte capable of implementing a lithium secondary battery with improved lifespan performance and storage performance by forming a solid electrolyte interphase (SEI) film with excellent recovery properties and improved durability on a negative electrode.

Technical solution

The present disclosure provides a non-aqueous electrolyte including lithium salts, an organic solvent, and an additive including a first additive and a second additive, wherein the first additive includes a compound represented by the following Formula 1, and the second additive includes a compound represented by the following Formula 2.

[Formula 1]

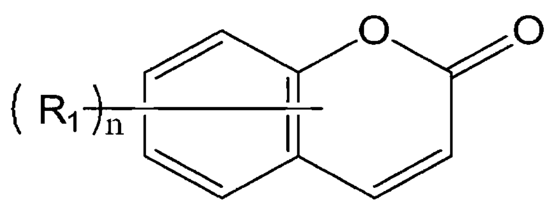

where $R_1$ includes halogen, a nitrile group, a propargyl group, an ester group, an ether group, a ketone group, a carboxyl group, a substituted or unsubstituted alkyl group, a substituted or unsubstituted alkenyl group, a substituted or

unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and where n is an integer of 0 to 6,

[Formula 2]

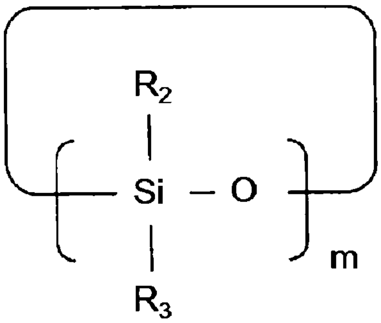

where $R_2$ and $R_3$ are independently selected from an alkyl group having 1 to 10 carbon atoms, an alkenyl group having 2 to 10 carbon atoms, an alkynyl group having 2 to 10 carbon atoms, and a substituent represented by the following Formula 3, and at least one of $R_2$ and $R_3$ is selected from among an alkenyl group having 2 to 10 carbon atoms, an alkynyl group having 2 to 10 carbon atoms, and a substituent represented by the following Formula 3, and m is an integer of 3 to 10.

[Formula 3]

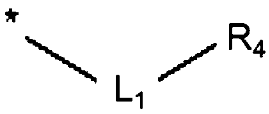

where $L_1$ is a direct bond, an alkylene group having 1 to 10 carbon atoms, an ester group, a sulfone group, a sulfonate group, a sulfate group, or a combination of two or more thereof, $R_4$ is an alkoxy group having 1 to 10 carbons, which is substituted with at least one fluorine atom, and * is a binding site.

In addition, the present disclosure provides a lithium secondary battery including a negative electrode; a positive electrode facing the negative electrode; a separator interposed between the negative electrode and the positive electrode; and the above-described non-aqueous electrolyte.

Advantageous effects

The non-aqueous electrolyte of the present disclosure is characterized by including a first additive containing a coumarin-based compound of Formula 1 and a second additive containing a cyclic siloxane-based compound of Formula 2 as additives. The first additive has strong reducibility at the negative electrode to cause a rapid ring-opening reaction during formation of an initial SEI film, so that a polymer-type SEI film may be formed, and an SEI film with excellent flexibility and recovery properties may be formed. In addition, the second additive may form a siloxane-based SEI film during neg ative electrode reduction and may contribute to the formation of an SEI film with a high shear modulus and excellent thermal stability and chemical and electrochemical stability. For example, radicals formed when the first additive is decomposed promote the ring-opening reaction of the second additive, so that an SEI film with excellent flexibility and recovery properties and high durability may be formed on the negative electrode by an organic action of the first additive and the second additive. Accordingly, the lithium secondary battery including the non-aqueous electrolyte according to the present disclosure may allow for improvements in lifespan performance and storage performance, especially improvements in lifespan performance and storage performance at high temperatures.

## MODE FOR CARRYING OUT THE INVENTION

It should be understood that the terms or words used in the specification and the claims should not be construed as being limited to general and dictionary meanings, but should be interpreted as the meanings and concepts corresponding to the technical idea of the present disclosure based on the principle that the inventor is allowed to define terms in

order to explain his/her invention in the best way possible.

In the descriptions herein, terms such as "include," "provide," and "have" are intended to designate the presence of features, numerals, steps, and components embodied herein, or combinations thereof, but should not be interpreted to exclude the possibility of presence or addition of one or more other features, numerals, steps, and components, or combinations thereof.

Meanwhile, unless otherwise specified in the present disclosure, "*" means a connected portion (bonding site) between terminals of the same or different atoms or Formulas.

In addition, in the description of "a to b carbons" in the present disclosure, "a" and "b" mean the number of carbon atoms included in a specific functional group. That is, the functional group may include "a" to "b" carbon atoms. For example, "an alkyl group having 1 to 5 carbon atoms" refers to an alkyl group having 1 to 5 carbon atoms, for example, $CH_3$-, $CH_3CH_2$-, $CH_3CH_2CH_2$-, $(CH_3)_2CH$-, $CH_3CH_2CH_2CH_2$-, $(CH_3)_2CHCH_2$-, $CH_3CH_2CH_2CH_2CH_2$-, or $(CH_3)_2CHCH_2CH_2$-.

Further, in the description herein, both an alkyl group or aryl group may be substituted or unsubstituted. Unless otherwise defined, the term "substituted" means that at least one hydrogen atom bonded to a carbon atom is substituted with an element other than the hydrogen atom, for example, substituted with an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a cycloalkynyl group having 3 to 12 carbon atoms, a heterocycloalkyl group having 3 to 12 carbon atoms, a heterocycloalkenyl group having 3 to 12 carbon atoms, a heterocycloalkynyl group having 2 to 12 carbon atoms, an aryloxy group having 6 to 12 carbon atoms, halogen atoms, a fluoroalkyl group having 1 to 20 carbon atoms, a nitro group, an aryl group having 6 to 20 carbon atoms, a heteroaryl group having 2 to 20 carbon atoms, or a haloaryl group having 6 to 20 carbon atoms.

As used herein, "about", "approximately", and "substantially" are used to mean ranges of numerical values or degrees or approximations thereof, in consideration of inherent manufacture and material tolerances, and are used to prevent infringers from unfairly using disclosed contents in which precise or absolute figures are provided to aid the understanding of the present disclosure.

Using a silicon-based active material as a negative electrode active material for a lithium secondary battery has the advantage of having high capacity but has a disadvantage in that the volume expansion/contraction is relatively large during the charging and discharging process. The large degree of volume expansion/contraction reduces the conductivity of the negative electrode, causing a decrease in the lifespan performance of the negative electrode and lithium secondary battery. In addition, during an initial activation of a lithium secondary battery, a solid electrolyte interface layer (SEI layer) is formed on the negative electrode surface. The silicon-based active material has a large volume expansion, which causes the SEI layer to break or a new negative electrode surface to continuously form. As a result, electrolyte side reactions are accelerated as the SEI film formation reaction continues to occur, and the thickness of the SEI film becomes thicker, increasing resistance.

The non-aqueous electrolyte of the present disclosure provides a lithium secondary battery that overcomes these disadvantages by including first and second additives expressed by specific Formulas in addition to lithium salts and an organic solvent.

Hereinafter, the present disclosure will be described in more detail.

## Non-Aqueous Electrolyte

The present disclosure relates to a non-aqueous electrolyte.

For example, the non-aqueous electrolyte according to the present disclosure includes lithium salts, an organic solvent and an additive. The additive includes a first additive and a second additive, and the first additive includes a compound represented by the following Formula 1, and the second additive includes a compound represented by the following Formula 2.

[Formula 1]

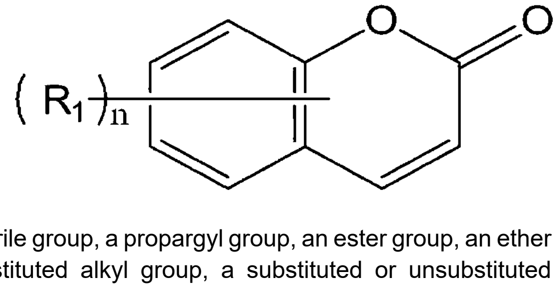

where $R_1$ includes halogen, a nitrile group, a propargyl group, an ester group, an ether group, a ketone group, a carboxyl group, a substituted or unsubstituted alkyl group, a substituted or unsubstituted alkenyl group, a substituted or

unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and where n is an integer of 0 to 6.

[Formula 2]

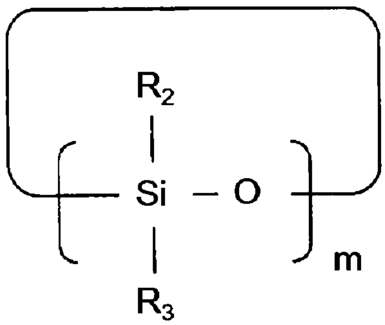

where $R_2$ and $R_3$ are independently selected from an alkyl group having 1 to 10 carbon atoms, an alkenyl group having 2 to 10 carbon atoms, an alkynyl group having 2 to 10 carbon atoms, and a substituent represented by the following Formula 3, and at least one of $R_2$ and $R_3$ is selected from among an alkenyl group having 2 to 10 carbon atoms, an alkynyl group having 2 to 10 carbon atoms, and a substituent represented by the following Formula 3, and m is an integer of 3 to 10.

[Formula 3]

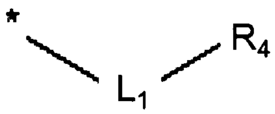

where $L_1$ is a direct bond, an alkylene group having 1 to 10 carbon atoms, an ester group, a sulfone group, a sulfonate group, a sulfate group, or a combination of two or more thereof, $R_4$ is an alkoxy group having 1 to 10 carbons, which is substituted with at least one fluorine atom, and * is a binding site.

(1) Lithium Salts

As for the lithium salts used herein, various lithium salts commonly used in non-aqueous electrolytes for lithium secondary batteries may be used without limitation. For example, the lithium salts may include $Li^+$ as a cation, and as an anion, at least one selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $B_{10}Cl_{10}^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(FSO_2)_2N^-$, $CF_3CF_2(CF_3)_2CO^-$, $(CF_3SO_2)_2CH^-$, $CH_3SO_3^-$, $CF_3(CF_2)_7SO_3^-$, $CF_3CO_2^-$, $CH_3CO_2^-$, $SCN^-$, and $(CF_3CF_2SO_2)_2N^-$.

For example, the lithium salts may include at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB ($LiB(C_2O_4)_2$), $LiCF_3SO_3$, LiFSI ($LiN(SO_2F)_2$), $LiCH_3SO_3$, $LiCF_3CO_2$, $LiCH_3CO_2$, and LiBETI ($LiN(SO_2CF_2CF_3)_2$). For example, the lithium salts may include at least one selected from the group consisting of $LiBF_4$, $LiClO_4$, $LiPF_6$, LiBOB ($LiB(C_2O_4)_2$), $LiCF_3SO_3$, LiTFSI ($LiN(SO_2CF_3)_2$), LiFSI (($LiN(SO_2F)_2$), and LiBETI ($LiN(SO_2CF_2CF_3)_2$)

The lithium salts may be included in the non-aqueous electrolyte at a concentration of about 0.5 M to 5 M, for example, about 0.8 M to 4 M, or about 0.8 M to 2.0 M. When the concentration of the lithium salts satisfies the above range, a lithium ion yield ($Li^+$ transference number) and a degree of dissociation of lithium ions are improved, so that output characteristics of the battery may be improved.

(2) Organic Solvent

The organic solvent is a non-aqueous solvent commonly used in lithium secondary batteries and is not particularly limited as long as it is capable of minimizing decomposition due to oxidation reactions, during a charging

and discharging process of the secondary battery.

Examples of the organic solvent may include at least one selected from the group consisting of a cyclic carbonate-based organic solvent, a linear carbonate-based organic solvent, a linear ester-based organic solvent, and a cyclic ester-based organic solvent.

Alternatively, examples of the organic solvent may include a cyclic carbonate-based organic solvent, a linear carbonate-based organic solvent, or a mixture thereof.

The cyclic carbonate-based organic solvent is a high-viscosity organic solvent and may easily dissociate the lithium salts in the electrolyte due to a high dielectric constant. Examples of the cyclic carbonate-based organic solvent may include at least one organic solvent selected from the group consisting of ethylene carbonate (EC), fluoroethylene carbonate (FEC), propylene carbonate (PC), 1,2-butylene carbonate, 2,3-butylene carbonate, 1,2-pentylene carbonate, 2,3-pentylene carbonate, and vinylene carbonate. Alternatively, examples of the cyclic carbonate-based organic solvent may include at least one selected from the group consisting of ethylene carbonate (EC) and fluoroethylene carbonate (FEC), and may include fluoroethylene carbonate (FEC) in terms of contributing to formation of an SEI film containing an inorganic material (LiF) according to one embodiment.

In addition, the linear carbonate-based organic solvent is an organic solvent having low viscosity and low dielectric constant, and examples of the linear carbonate-based organic solvent may include at least one selected from the group consisting of dimethyl carbonate (DMC), diethyl carbonate (DEC), dipropyl carbonate, ethylmethyl carbonate (EMC), methylpropyl carbonate, and ethylpropyl carbonate. Alternatively, examples of the linear carbonate-based organic solvent may include at least one selected from the group consisting of ethylmethyl carbonate (EMC) and diethyl carbonate (DEC), and according to one embodiment, may include diethyl carbonate (DEC) in terms of further improving oxidation stability of the non-aqueous electrolyte.

The organic solvent may be a mixture of a cyclic carbonate-based organic solvent and a linear carbonate-based organic solvent. The cyclic carbonate-based organic solvent and the linear carbonate-based organic solvent may be mixed at a volume ratio of about 5:95 to 40:60, for example, about 7:93 to 25:75. When a mixing ratio of the cyclic carbonate-based organic solvent and the linear carbonate-based organic solvent satisfies the above range, high dielectric constant and low viscosity characteristics may be simultaneously satisfied, and excellent ionic conductivity characteristics may be realized.

In addition, the organic solvent may further include at least one ester-based organic solvent selected from the group consisting of a linear ester-based organic solvent and a cyclic ester-based organic solvent in addition to at least one carbonate-based organic solvent selected from the group consisting of the cyclic carbonate-based organic solvent and the linear carbonate-based organic solvent, in order to prepare electrolytes having high ionic conductivity.

Examples of the linear ester-based organic solvent may include at least one selected from the group consisting of methyl acetate, ethyl acetate, propyl acetate, methyl propionate, ethyl propionate, propyl propionate, and butyl propionate.

Further, examples of the cyclic ester-based organic solvent may include at least one selected from the group consisting of γ-butyrolactone, γ-valerolactone, γ-caprolactone, σ-valerolactone, and ε-caprolactone.

Meanwhile, as for the organic solvent, an organic solvent commonly used in non-aqueous electrolytes may be additionally used if necessary, without limitation. Examples of the organic solvent may further include at least one organic solvent among an ether-based organic solvent, a glyme-based solvent, and a nitrile-based organic solvent.

Examples of the ether-based solvent may include any one selected from the group consisting of dimethyl ether, diethyl ether, dipropyl ether, methyl ethyl ether, methyl propyl ether, ethyl propyl ether, 1,3-dioxolane (DOL), and 2,2-bis (trifluoromethyl)-1,3-dioxolane (TFDOL), or a mixture of two or more thereof, but the present disclosure is not limited thereto.

The glyme-based solvent is a solvent that has a high dielectric constant and low surface tension compared to the linear carbonate-based organic solvent and has low reactivity with metal. Examples of the glyme-based solvent may include at least one selected from the group consisting of dimethoxyethane (glime or DME), diethoxyethane, diglyme, triglyme, and tetra-glyme (TEGDME), but the present disclosure is not limited thereto.

The nitrile-based solvent may include at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but the present disclosure is not limited thereto.

(3) Additive

The non-aqueous electrolyte includes an additive.

The additive includes a first additive and a second additive.

The first additive may include a compound represented by following Formula 1:

[Formula 1]

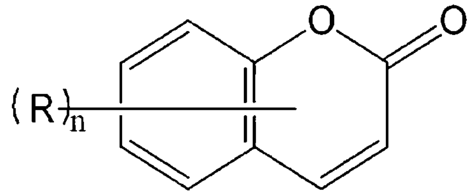

where $R_1$ includes halogen, a nitrile group, a propargyl group, an ester group, an ether group, a ketone group, a carboxyl group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and where n is an integer of 0 to 6.

The compound represented by Formula 1 included in the first additive is, for example, a coumarin-based compound and has strong reducibility at the negative electrode to cause a rapid ring-opening reaction during formation of an initial SEI film, so that a PEO-based polymer-type SEI film may be formed. This polymer-type SEI film may have excellent flexibility and recovery properties.

However, when the first additive is used alone, there is a risk that the thermal stability and chemical and electrochemical stability of the SEI film may be reduced, and durability may be reduced. For example, when the first additive is used alone, it may be difficult to form a highly durable SEI film on a negative electrode active material (for example, a silicon-based active material) that undergoes volume expansion during charging and discharging. In addition, when the first additive is used alone, the additive may be reduced to form radicals and then attack the carbonate-based solvent, causing an additional unwanted reduction reaction. In this aspect, the non-aqueous electrolyte according to the present disclosure uses a combination of the first additive and the second additive based on cyclic siloxane, and due to the promotion of ring-opening reactions of the second additive according to radical formation of the first additive, it is possible to form an SEI film with excellent flexibility and recovery properties and excellent durability such as thermal stability on the negative electrode.

For example, the first additive has strong reducibility at the negative electrode to cause a rapid ring-opening reaction during formation of the initial SEI film, so that a polymer-type SEI film may be formed and an SEI film with excellent flexibility and recovery properties may be formed. In addition, the second additive may form a siloxane-based SEI film during negative electrode reduction and may contribute to the formation of an SEI film with a high shear modulus and excellent thermal stability and chemical and electrochemical stability. For example, radicals formed when the first additive is decomposed promote the ring-opening reaction of the second additive, so that an SEI film with excellent flexibility and recovery properties and high durability may be formed on the negative electrode by an organic action of the first additive and the second additive. Accordingly, the lithium secondary battery including the non-aqueous electrolyte according to the present disclosure may allow for improvements in lifespan performance and storage performance, especially improvements in lifespan performance and storage performance at high temperatures.

In Formula 1, $R_1$ may be, for example, halogen (the halogen may be selected from among F, Cl, Br and I, for example, may be F), a nitrile group, a propargyl group, an ester group, an ether group, or a combination of two or more thereof. This substituent may improve the reducibility of the first additive, thereby improving lithium ion transport performance along with smooth formation of the SEI film by the first additive.

In Formula 1, n may be an integer selected from 0 to 6, for example, may be an integer selected from 1 to 6, or n may be 1. In Formula 1, when n is 2 or more, each $R_1$ may be the same or different.

According to one embodiment, the compound represented by Formula 1 may include at least one selected from the group consisting of a compound represented by Formula 1-A and a compound represented by Formula 1-B.

[Formula 1-A]

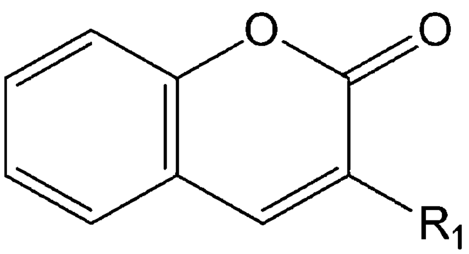

[Formula 1-B]

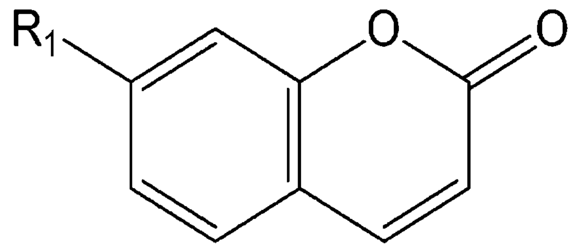

where $R_1$ is as defined in Formula 1.

The compounds represented by Formula 1-A and Formula 1-B have structures in which substituents are present at the 3- and 7-positions of the ring structure (based on IUPAC nomenclature), respectively, it is advantageous to be synthesized at the positions compared to other substitution positions.

For example, the compound represented by Formula 1 may include at least one selected from the group consisting of compounds represented by following Formula 1-1 to Formula 1-9. In that the compound represented by Formula 1 is more smoothly reduced at the negative electrode and is more advantageous for forming an SEI film, the compound represented by Formula 1 may include at least one selected from the group consisting of, for example, compounds represented by the following Formula 1-1, Formula 1-2, Formula 1-3, and Formula 1-4, or according to one embodiment, the compound represented by Formula 1 may include a compound represented by the following Formulas 1-4.

[Formula 1-1]

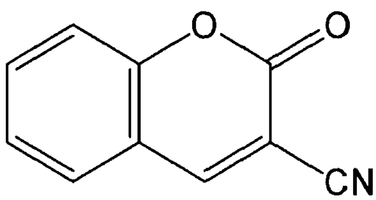

[Formula 1-2]

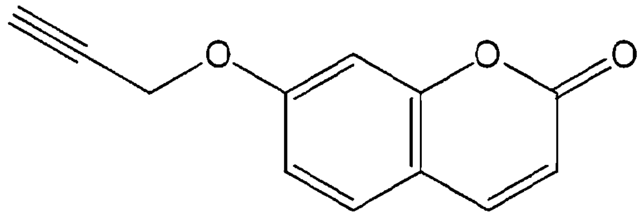

[Formula 1-3]

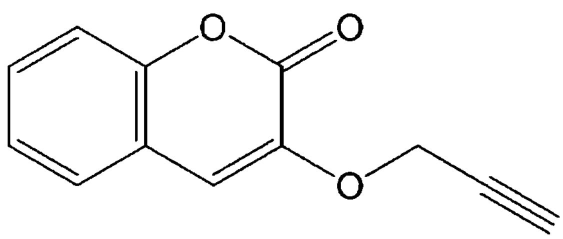

[Formula 1-4]

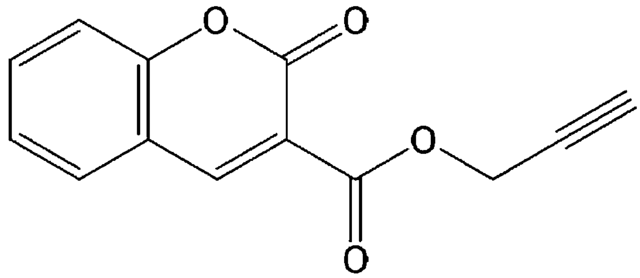

[Formula 1-5]

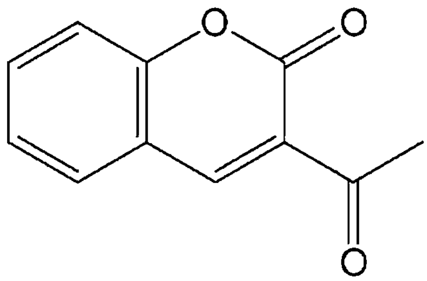

[Formula 1-6]

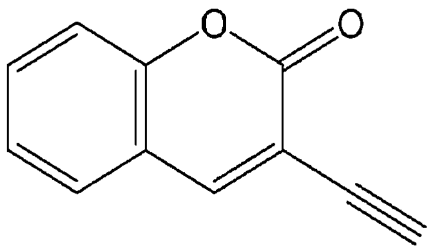

[Formula 1-7]

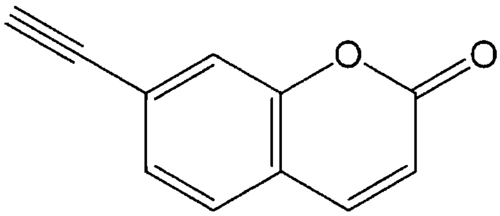

[Formula 1-8]

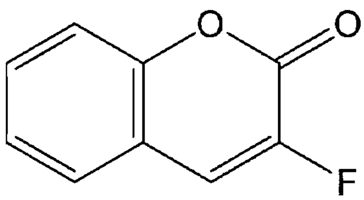

[Formula 1-9]

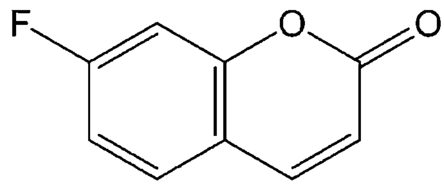

The first additive may be included in the non-aqueous electrolyte in an amount of about 0.01% to 10% by weight, for example, about 0.05% to 7% by weight, about 0.1% to 2% by weight, or about 0.3% to 1% by weight. When the first additive is used in the above-described content range, it is possible to form a flexible and highly durable SEI film on the negative electrode and prevent an increase in resistance when an excessive amount of the first additive is added.

The second additive may include a compound represented by the following Formula 2.

[Formula 2]

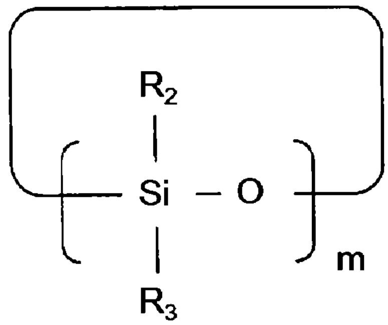

where $R_2$ and $R_3$ are independently selected from an alkyl group having 1 to 10 carbon atoms, an alkenyl group having 2 to 10 carbon atoms, an alkynyl group having 2 to 10 carbon atoms, and a substituent represented by the following Formula 3, and at least one of $R_2$ and $R_3$ is selected from among an alkenyl group having 2 to 10 carbon atoms, an alkynyl group having 2 to 10 carbon atoms, and a substituent represented by the following Formula 3, and where m is an integer of 3 to 10.

[Formula 3]

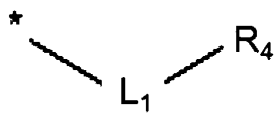

where $L_1$ is a direct bond, an alkylene group having 1 to 10 carbon atoms, an ester group, a sulfone group, a sulfonate group, a sulfate group, or a combination of two or more thereof, $R_4$ is an alkoxy group having 1 to 10 carbons, which is substituted with at least one fluorine atom, and * is a binding site.

The second additive may form a siloxane-based SEI film during negative electr ode reduction and may contribute to the formation of an SEI film with a high shear modulus and excellent thermal stability and chemical and electrochemical stability.

However, the second additive has a relatively low tendency to reduce itself, so that it is difficult to achieve a smooth ring-opening reaction when the second additive is used alone. Accordingly, when the second additive is used alone, it may be difficult to form the SEI film itself. However, the non-aqueous electrolyte according to the present disclosure is characterized by using a first additive in combination with a second additive. When the first additive is rapidly decomposed upon initial activation to form radicals, since the ring-opening reaction of the second additive may be promoted by the radicals, it is possible to form an SEI film with excellent flexibility and recovery properties and significantly improved durability on the negative electrode through an organic action of the first and second additives. For example, the effect of using the first additive and the second additive in combination may be further maximized when a silicon-based active material whose volume changes significantly during charging and discharging is used as the negative electrode active material.

In Formula 2, $R_2$ and $R_3$ are independently selected from an alkyl group having 1 to 10 carbon atoms, an alkenyl group having 2 to 10 carbon atoms, an alkynyl group having 2 to 10 carbon atoms, and a substituent represented by Formula 3. At this time, at least one of $R_2$ and $R_3$ is selected from an alkenyl group having 2 to 10 carbon atoms, an alkynyl group having 2 to 10 carbon atoms, and a substituent represented by Formula 3 above. In this case, for example, the reduction reaction of a cyclic siloxane compound may be further promoted.

For example, $R_2$ and $R_3$ may be independently selected from an alkyl group having 1 to 5 carbon atoms, an alkenyl group having 2 to 5 carbon atoms, an alkynyl group having 2 to 5 carbon atoms, and a substituent represented by following Formula 3-1, and at least one of $R_2$ and $R_3$ may be selected from an alkenyl group having 2 to 5 carbon atoms, an alkynyl group having 2 to 5 carbon atoms, and a substituent represented by the following Formula 3-1.

[Formula 3-1]

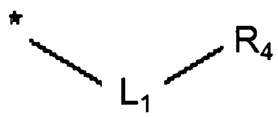

where $L_1$ is an alkylene group having 1 to 5 carbon atoms, a sulfone group, or a combination thereof, $R_4$ is an alkoxy group having 1 to 5 carbon atoms, which is substituted with at least one fluorine atom, and * is a binding site.

For example, $R_2$ and $R_3$ may be independently selected from an alkyl group having 1 to 3 carbon atoms, an alkenyl group having 2 to 3 carbon atoms, an alkynyl group having 2 to 3 carbon atoms, and a substituent represented by following Formula 3-2, and at least one of $R_2$ and $R_3$ may be selected from an alkenyl group having 2 to 3 carbon atoms, an alkynyl group having 2 to 3 carbon atoms, and a substituent represented by the following Formula 3-2. When it is within the above range, an increase in resistance due to an excessive content of carbon atoms is prevented.

[Formula 3-2]

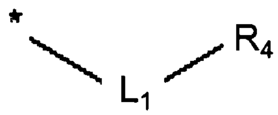

where $L_1$ is a methylene group, an ethylene group, a sulfone group, or a combination of two or more thereof, $R_4$ is one selected from the group consisting of - $OCF_3$, $-OCF_2CF_3$ and $-OCF_2CF_2CF_3$, and * is a bonding site.

Meanwhile, in Formula 2, $R_2$ may be an alkyl group having 1 to 10 carbon atoms, for example, an alkyl group having 1 to 5 carbon atoms, and more specifically, an alkyl group having 1 to 3 carbon atoms. Additionally, in Formula 2, $R_3$ may be selected from an alkenyl group having 2 to 10 carbon atoms, an alkynyl group having 2 to 10 carbon atoms, and a substituent represented by Formula 3, may be selected from an alkenyl group having 2 to 5 carbon atoms, an alkynyl group having 2 to 5 carbon atoms, and a substituent represented by Formula 3-1, and alternatively, may be selected from an alkenyl group having 2 to 3 carbon atoms, an alkynyl group having 2 to 3 carbon atoms, and a substituent represented by Formula 3-2. When $R_2$ is an alkyl group and $R_3$ is an unsaturated hydrocarbon group or a fluorine-substituted alkoxy group, an increase in resistance due to the presence of excessive unsaturated hydrocarbon radicals is prevented.

Examples of the compound represented by Formula 2 may include at least one selected from the group consisting of compounds represented by Formula 2-1 to Formula 2-16; may include at least one selected from the group consisting of compounds represented by Formula 2-1, Formula 2-3, Formula 2-4, Formula 2-5, Formula 2-7, Formula 2-13, and Formula 2-14; and may include at least one selected from the group consisting of compounds represented by Formula 2-1, Formula 2-3, Formula 2-5, and Formula 2-7; or may include a compound represented by following Formula 2-3 according to one embodiment.

[Formula 2-1]

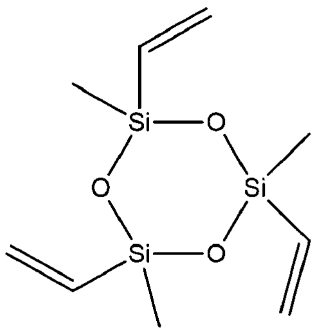

[Formula 2-2]

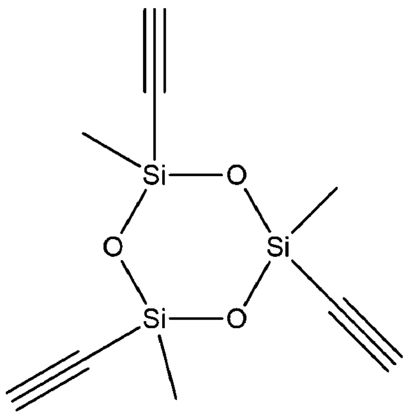

[Formula 2-3]

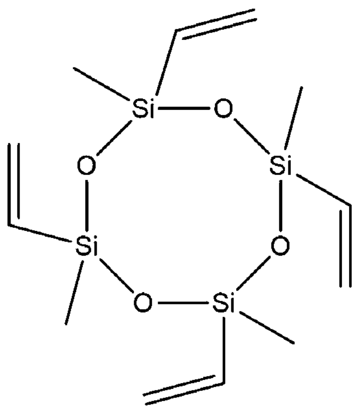

[Formula 2-4]

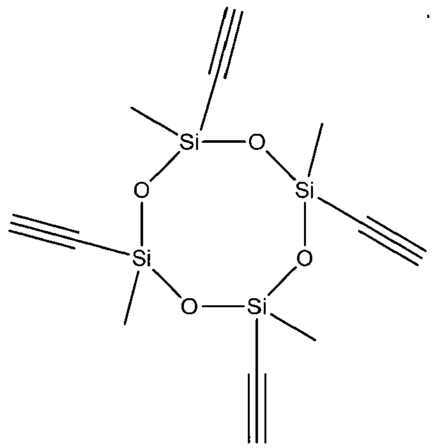

[Formula 2-5]

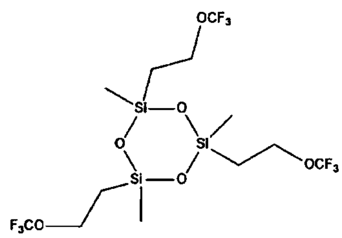

[Formula 2-6]

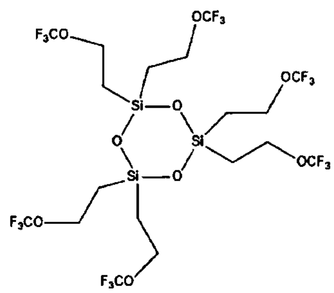

[Formula 2-7]

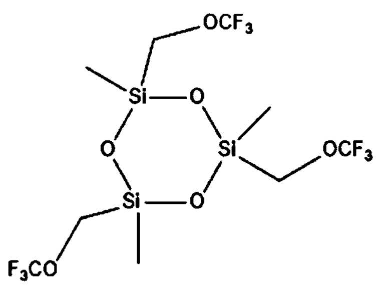

[Formula 2-8]

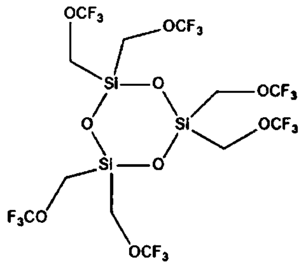

[Formula 2-9]

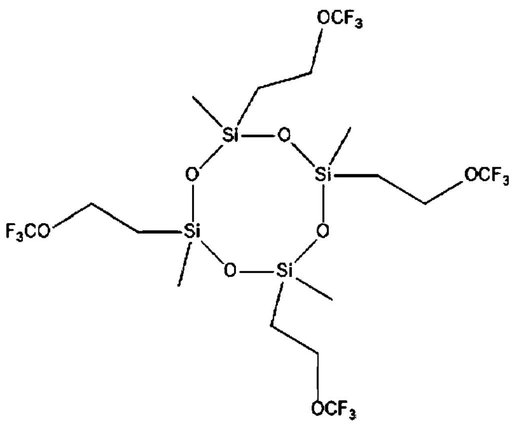

[Formula 2-10]

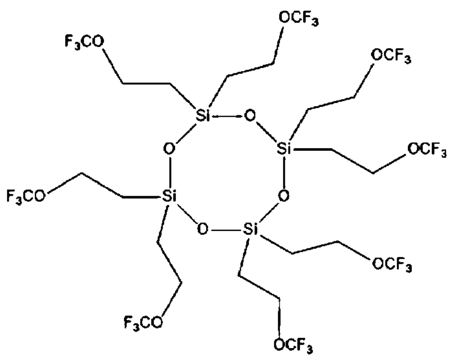

[Formula 2-11]

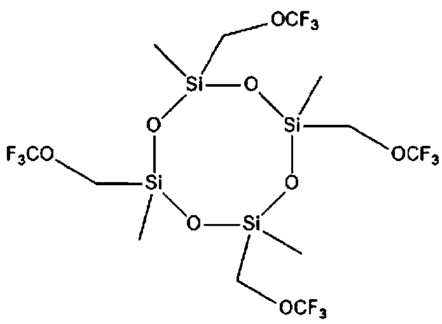

[Formula 2-12]

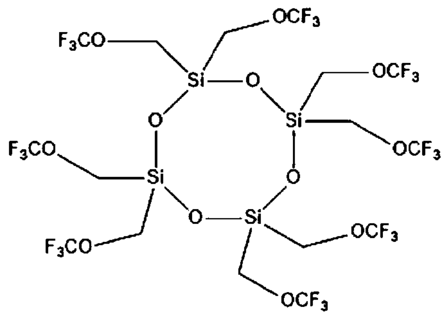

[Formula 2-13]

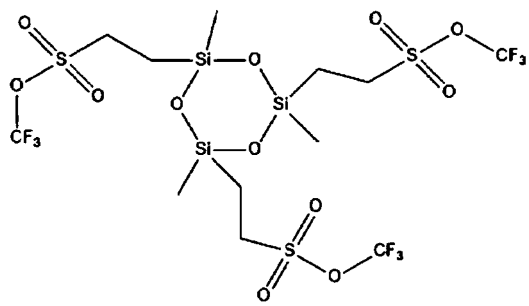

[Formula 2-14]

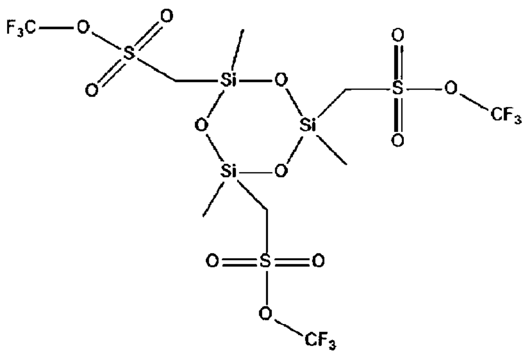

[Formula 2-15]

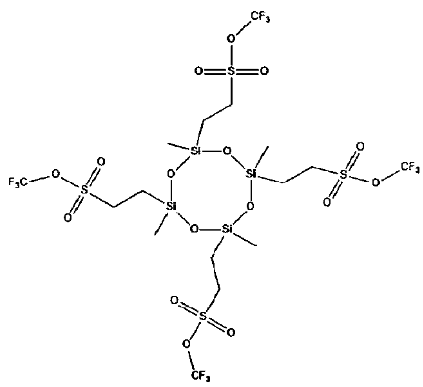

[Formula 2-16]

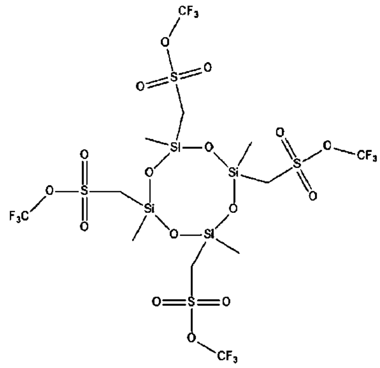

The second additive may be included in the non-aqueous electrolyte in an amount of about 0.01% to 10% by weight, for example, about 0.05% to 7% by weight, about 0.1% to 2% by weight, or about 0.3% to 1% by weight. When the content of the second additive satisfies the above range, an SEI film is effectively formed with excellent durability, such as thermal stability, and an increase in resistance of the lithium secondary battery due to excessive addition of the additive and a corresponding decrease in life performance are prevented.

A weight ratio of the first additive and the second additive may be about 1:99 to 99:1, for example, 15:85 to 85:15, or 40:60 to 60:40. When the above-described weight ratio is satisfied, the effect of using the first additive and the second additive in combination is favorable, so that high-temperature lifespan performance, high-temperature storage performance, and safety improvement effects of the lithium secondary battery may be exhibited.

The additive may further include an additional additive (a third additive) along with the first additive and the second additive. The additional additive may be included in the non-aqueous electrolyte to prevent decomposition of the non-aqueous electrolyte in a high-power environment, which causes negative electrode disintegration, or to improve low-temperature high-rate discharge characteristics, high-temperature stability, overcharge prevention, and battery expansion inhibition at high temperatures.

For example, the additional additive may be at least one selected from among the group consisting of vinylene carbonate, vinyl ethylene carbonate, fluoroethylene carbonate, propane sultone, propene sultone, succinonitrile, adiponitrile, ethylene sulfate, LiBOB (lithium bis-(oxalato)borate), TMSPa (3-trimethoxysilanyl-propyl-N-aniline), and TMSPi (tris(trimethylsilyl)phosphite), and may be, for example, vinylene carbonate.

The additional additive may be included in the non-aqueous electrolyte in an amount of about 0.1% to 15% by weight.

## Lithium Secondary Battery

Additionally, the present disclosure provides a lithium secondary battery including the above-described non-aqueous electrolyte.

The lithium secondary battery according to the present disclosure includes a negative electrode; a positive electrode facing the negative electrode; a separator interposed between the negative electrode and the positive electrode; and the non-aqueous electrolytes described above.

The lithium secondary battery may be manufactured by storing an electrode assembly including the negative electrode; the positive electrode facing the negative electrode; and the separator disposed between the negative electrode and the positive electrode, in a battery case and injecting the non-aqueous electrolyte into the battery case.

Since the non-aqueous electrolyte has been described above, the negative electrode, positive electrode, and separator will be described below.

### (1) Negative Electrode

The negative electrode includes a negative electrode active material.

The negative electrode active material may be any material that is used as a negative electrode active material in the art without limitation. For example, the negative electrode active material may include at least one selected from a silicon-based active material and a carbon-based active material or may include a silicon-based active material.

Although the silicon-based active material exhibits higher capacity than the carbon-based active material, there is a problem in the silicon-based active material in that the degree of volume expansion/contraction due to charging and

discharging is significant. However, when the silicon-based active material and the above-described non-aqueous electrolyte of the present disclosure are used together, a flexible, highly resilient and durable SEI film may be formed on the negative electrode, so that it is possible to implement a lithium secondary battery capable of preventing electrolyte side reactions and having improved lifespan and storage performance.

The silicon-based active material may include a compound represented by following Formula A.

[Formula A] $SiO_x(0 \leq x < 2)$

where, since $SiO_2$ does not react with lithium ions and may not store lithium, x may be within the above range.

An average particle diameter ($D_50$) of the silicon-based active material may be about 1$\mu$m to 20$\mu$m.

The carbon-based active material may include at least one selected from the group consisting of graphite, hard carbon, soft carbon, carbon black, graphene, and fibrous carbon, and may include graphite according to one embodiment. The graphite may include at least one selected from the group consisting of artificial graphite and natural graphite.

The average particle diameter ($D_50$) of the carbon-based active material may be about 10 $\mu$m to 30 $\mu$m, for example, about 15 $\mu$m to 25 $\mu$m in terms of ensuring structural stability during charging and discharging, and reducing side reactions with the electrolyte.

The negative electrode may include a negative electrode current collector; and a negative electrode active material layer disposed on at least one surface of the negative electrode current collector. The negative electrode active material may be included in the negative electrode active material layer.

The negative electrode current collector may be, without being particularly limited, any negative electrode current collector that has high conductivity without causing chemical changes in the battery. For example, the negative electrode current collector may be copper, stainless steel, aluminum, nickel, titanium, calcined carbon, copper or stainless steel subjected to surface treatment with carbon, nickel, titanium, or silver, and aluminum-cadmium alloys.

The negative electrode current collector may typically have a thickness of about 3 $\mu$m to 500 $\mu$m.

The negative electrode current collector may have fine unevenness formed on a surface thereof to strengthen bonding force of the negative electrode active material. For example, the negative electrode current collector may be used in various forms, such as a film, a sheet, a foil, a net, a porous body, a foam, and a non-woven body.

The negative electrode active material layer is disposed on at least one surface of the negative electrode current collector. For example, the negative electrode active material layer may be disposed on one surface or both surfaces of the negative electrode current collector.

The negative electrode active material may be included in the negative electrode active material layer in an amount of about 60% to 99% by weight in order to sufficiently exhibit capacity in the secondary battery while minimizing the impact of volume expansion/contraction on the battery.

The negative electrode active material layer may further include a binder and/or a conductive material along with the silicon-based active material.

The binder may be used to improve adhesion between the negative electrode active material layer and the negative electrode current collector, which will be described later, or to improve binding force between the silicon-based active materials.

For example, in that the binder can further improve electrode adhesion and provide sufficient resistance to volume expansion/contraction of the silicon-based active material, the binder may include at least one selected from the group consisting of styrene butadiene rubber (SBR), nitrile butadiene rubber (NBR), acrylonitrile butadiene rubber, acrylic rubber, butyl rubber, fluoro-rubber, polyvinyl alcohol, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacryl amide (PAM).

The binder may be included in the negative electrode active material layer in an amount of about 1% to 30% by weight. When the binder is in the above range, the negative electrode active materials can be better bound to minimize the problem of volume expansion of the active materials, and at the same time, dispersion of the binder can be facilitated in preparing a slurry for forming the negative electrode active material layer and coating properties and phase stability of the slurry can be improved.

The conductive material may be used to assist and improve conductivity in secondary batteries, and may be, without being particularly limited, any material that has conductivity without causing chemical changes. Examples of the conductive material may include at least one selected from the group consisting of graphite, such as natural graphite or artificial graphite; carbon black, such as carbon black, acetylene black, Ketchen black, channel black, furnace black, lamp black, or thermal black; conductive fibers, such as carbon fibers and metal fibers; conductive tubes, such as carbon nanotubes; fluorocarbon; metal powder, such as aluminum or nickel powder; conductive whiskers, such as zinc oxides and potassium titanate; conductive metal oxides, such as titanium oxides; and polyphenylene derivatives.

The conductive material may be included in the negative electrode active material layer in an amount of about 1% to 20% by weight, and when the conductive material is in the above range, an excellent conductive network can be formed

while mitigating an increase in resistance due to the binder.

The thickness of the negative electrode active material layer may be about 5 μm to 500 μm, for example, about 5 μm to 100 μm.

The negative electrode may be manufactured by coating a negative electrode slurry including a negative electrode active material and optionally a binder, a conductive material, and a solvent for forming a negative electrode slurry on the negative electrode current collector, followed by drying and rolling.

The solvent for forming the negative electrode slurry may include at least one selected from the group consisting of distilled water, ethanol, methanol, and isopropyl alcohol, for example, in terms of facilitating dispersion of the negative electrode active material, the binder, and/or the coating material. According to one embodiment, the solvent may include distilled water.

**(2) Positive Electrode**

The positive electrode includes a positive electrode active material.

The positive electrode active material is a compound capable of reversible intercalation and deintercalation of lithium, and may include, for example, a lithium transition metal complex oxide including lithium and at least one transition metal consisting of nickel, cobalt, manganese, and aluminum, or a lithium transition metal complex oxide including transition metals including nickel, cobalt, and manganese, and lithium.

Examples of the lithium transition metal complex oxide may include lithium-manganese-based oxides (*e.g.,* $LiMnO_2$ and $LiMn_2O_4$), lithium-cobalt-based oxides (*e.g.,* $LiCoO_2$), lithium-nickel-based oxides (*e.g.,* $LiNiO_2$), lithium-nickel-manganese-based oxides (*e.g.*, $LiNi_{1-Y}Mn_YO_2$ (here, $0<Y<1$), $LiMn_{2-z}Ni_zO_4$(here, $0 < Z < 2$)), lithium-nickel-cobalt-based oxides (*e.g.,* $LiNi_{1-Y1}Co_{Y1}O_2$ (here, $0<Y_1<1$)), lithium-manganese-cobalt-based oxides (*e.g.,* $LiCo_{1-Y2}Mn_{Y2}O_2$ (here, $0<Y_2<1$), $LiMn_{2-z1}Co_{Z1}O_4$ (here, $0 < Z_1 < 2$)), lithium-nickel-manganese-cobalt-based oxides (*e.g.,* $Li(Ni_pCo_qMn_{r1})O_2$ (here, $0 < p < 1$, $0 < q < 1$, $0 < r1 < 1$, $p+q+r1=1$), $Li(Ni_{p1}Co_{q1}Mn_{r2})O_4$ (here, $0 < p_1 < 2$, $0 < q_1 < 2$, $0 < r_2 < 2$, $p_1+q_1+r_2=2$)), and lithium-nickel-cobalt-transition metal (M) oxides (e.g., $Li(Ni_{p2}Co_{q2}Mn_{r3}M_{s2})O_2$ (here, M is selected from the group consisting of Al, Fe, V, Cr, Ti, Ta, Mg, and Mo, and $p_2$, $q_2$, $r_3$, and $s_2$ are atomic fractions of independent elements, respectively, $0 < p_2 < 1$, $0 < q_2 < 1$, $0 < r_3 < 1$, $0 < s_2 < 1$, $p_2+q_2+f_3+s_2=1$)), and may include any one of them or two or more thereof. Among them, in that capacity characteristics and stability of the battery can be improved, the lithium transition metal complex oxide may be $LiCoO_2$, $LiMnO_2$, $LiNiO_2$, a lithium nickel-manganese-cobalt oxide (*e.g.,* $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$ or $Li(Ni_{0.8}Mn_{0.1}Co_{0.1})O_2$), or lithium nickel cobalt aluminum oxide (e.g., $Li(Ni_{0.8}Co_{0.15}Al_{0.05})O_2$). Considering remarkable improvement effects due to the control of types and content ratios of constituent elements forming the lithium transition metal complex oxide, the lithium transition metal complex oxide may be $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$ or $Li(Ni_{0.8}Mn_{0.1}Co_{0.1})O_2$, and any one or a mixture of two or more of them may be used.

According to one embodiment, the positive electrode active material is a lithium transition metal complex oxide and may include about 60 mol% or more of nickel based on the total number of moles of transition metals included in the lithium transition metal complex oxide. For example, the positive electrode active material is a lithium transition metal complex oxide, and the transition metal may include nickel; and at least one selected from manganese, cobalt, and aluminum, and the nickel may be included in an amount of about 60 mol% or more, for example, about 60 mol% to 90 mol%, based on the total number of moles of the transition metal. When the lithium transition metal complex oxide containing a high content of nickel is used together with the above-described non-aqueous electrolyte, it is possible that the by-products in the gas phase generated by structural collapse are reduced.

Additionally, the positive electrode active material may include a lithium complex transition metal oxide represented by following Formula B.

[Formula B] $Li_{1+x}(Ni_aCo_bMn_cM_d)O_2$

where M is at least one selected from among W, Cu, Fe, V, Cr, Ti, Zr, Zn, Al, In, Ta, Y, La, Sr, Ga, Sc, Gd, Sm, Ca, Ce, Nb, Mg, B and Mo, and 1+x, a, b, c and d are the atomic fractions of independent elements, $0 \le x \le 0.2$, $0.50 \le a < 1$, $0 < b \le 0.25$, $0 < c \le 0.25$, $0 \le d \le 0.1$, $a+b+c+d=1$.

According to one embodiment, a, b, c, and d may be $0.70 \le a \le 0.95$, $0.025 \le b \le 0.20$, $0.025 \le c \le 0.20$, and $0 \le d \le 0.05$, respectively.

In addition, a, b, c, and d may be $0.80 \le a \le 0.95$, $0.025 \le b \le 0.15$, $0.025 \le c \le 0.15$, and $0 \le d \le 0.05$, respectively.

In addition, a, b, c, and d may be $0.85 \le a \le 0.90$, $0.05 \le b \le 0.10$, $0.05 \le c \le 0.10$, and $0 \le d \le 0.03$, respectively.

The positive electrode may include a positive electrode current collector; and a positive electrode active material layer disposed on at least one surface of the positive electrode current collector. The positive electrode active material layer may include the above-described positive electrode active material.

The positive electrode current collector may typically have a thickness of about 3 μm to 500 μm.

The positive electrode current collector may have fine unevenness formed on a surface thereof to strengthen bonding force of the positive electrode active material. For example, the positive electrode current collector may be used in various forms, such as a film, a sheet, a foil, a net, a porous body, a foam, and a non-woven body.
The positive electrode active material layer is disposed on at least one surface of the positive electrode current collector. For example, the positive electrode active material layer may be disposed on one surface or both surfaces of the positive electrode current collector.
The positive electrode active material may be included in the positive electrode active material layer in an amount of about 80% by weight to 99% by weight, in consideration of exhibiting sufficient capacity of the positive electrode active material.
The positive electrode active material layer may further include a binder and/or a conductive material along with the above-described positive electrode active material.
The binder is a component that aids in the binding of the active material and the conductive material and binding to the collector, and may include, for example, at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylenepropylene-diene terpolymer (EPDM), sulfonated EPDM, styrene-butadiene rubber, and fluoro-rubber. For example, the binder may include polyvinylidene fluoride.
The binder may be included in the positive electrode active material layer in an amount of about 1% by weight to 20% by weight, for example, about 1.2% by weight to 10% by weight, in terms of securing sufficient binding force between components such as the positive electrode active materials.
The conductive material may be used to assist and improve conductivity in secondary batteries, and may be, without being particularly limited, any material that has conductivity without causing chemical changes. Examples of the positive electrode conductive material may include at least one selected from the group consisting of graphite, such as natural graphite or artificial graphite; carbon black, such as carbon black, acetylene black, Ketchen black, channel black, furnace black, lamp black, or thermal black; conductive fibers, such as carbon fibers and metal fibers; conductive tubes, such as carbon nanotubes; fluorocarbon; metal powder, such as aluminum or nickel powder; conductive whiskers, such as zinc oxides and potassium titanate; conductive metal oxides, such as titanium oxides; and polyphenylene derivatives. According to one embodiment, the positive electrode conductive material may include carbon nanotubes in terms of improving conductivity.
The conductive material may be included in the positive electrode active material layer in an amount of about 1% by weight to 20% by weight, for example, about 1.2% by weight to 10% by weight in terms of securing sufficient electrical conductivity.
The thickness of the positive electrode active material layer may be about 5 $\mu$m to 500 $\mu$m, for example, about 20 $\mu$m to 200 $\mu$m.
The positive electrode may be manufactured by coating a positive electrode slurry including a positive electrode active material and optionally a binder, a conductive material, and a solvent for forming a positive electrode slurry on the positive electrode current collector, followed by drying and rolling.

**(3) Separator**

The separator may be interposed between the positive electrode and the negative electrode.
The separator may be any porous polymer films commonly used as a separator conventionally such as, for example, a porous polymer film made of polyolefin-based polymers such as ethylene homopolymer, propylene homopolymer, ethylene/butene copolymer, ethylene/hexene copolymer, and ethylene/methacrylate copolymer, which is used alone or laminated therewith. Alternatively, the separator may be any typical porous non-woven fabrics, for example, non-woven fabrics made of high melting point glass fibers, or polyethylene terephthalate fibers, but is not limited thereto. Further, a coated separator including ceramic components or polymer materials may be used to secure heat resistance or mechanical strength and may optionally be used in a single-layer or multilayer structure.
An external shape of the lithium secondary battery of the present disclosure is not particularly limited, but may be a cylindrical shape using a can, a square shape, a pouch shape, or a coin shape.
Hereinafter, the present disclosure will be described in more detail through examples. However, the following examples are intended to illustrate the present disclosure and are not intended to limit the scope of the present disclosure. It will be obvious to those skilled in the art that various changes and modifications may be made within the scope of the present description and the technical idea, and that such changes and modifications fall within the scope of the appended claims.

**Examples and Comparative Examples**

**Example 1**

(Preparation of Non-Aqueous Electrolyte)

As an organic solvent, a mixture of fluoroethylene carbonate (FEC) and diethyl carbonate (DEC) in a volume ratio of 10:90 was used.

A non-aqueous electrolyte was prepared by adding $LiPF_6$ as lithium salts, a compound represented by Formula 1-4 as a first additive, and a compound represented by Formula 2-3 as a second additive to the organic solvent.

The $LiPF_6$ was included in the non-aqueous electrolyte at a molar concentration of 1.5 M.

The compound represented by Formula 1-4 was included in the non-aqueous electrolyte in an amount of 0.5% by weight, and the compound represented by Formula 2-3 was included in the non-aqueous electrolyte in an amount of 0.5% by weight.

(Manufacture of Lithium Secondary Battery)

A positive electrode active material ($Li[Ni_{0.85}Co_{0.05}Mn_{0.07}Al_{0.03}]O_2$), a conductive material (carbon nanotube), and a binder (polyvinylidene fluoride) were added to N-methyl-2-pyrrolidone (NMP) serving as a solvent in a weight ratio of 97.74:0.70:1.56 to prepare a positive electrode mixture slurry (75.5% by weight of solid content). The positive electrode mixture slurry was applied to one surface of a positive electrode current collector (Al thin film) having a thickness of 12 $\mu$m, dried, and roll-pressed to prepare a positive electrode.

A negative electrode active material (a silicon-based active material, Si), a conductive material (carbon black), and a binder (styrene-butadiene rubber) were added to distilled water serving as a solvent in a weight ratio of 70.0:20.3:9.7 to prepare a negative electrode mixture slurry (26% by weight of solid content). The negative electrode mixture slurry was applied to one surface of a negative electrode current collector (Cu thin film) having a thickness of 15 $\mu$m, dried, and roll-pressed to prepare a negative electrode.

A polyethylene porous film separator was interposed between the prepared positive and negative electrodes in a dry room, and then the prepared non-aqueous electrolyte was injected to prepare a secondary battery.

**Example 2**

A non-aqueous electrolyte and a lithium secondary battery were manufactured in the same manner as Example 1 with the exception that, as the first additive, a compound represented by Formula 1-1 instead of the compound represented by Formula 1-4, was added to the non-aqueous electrolyte in an amount of 0.5% by weight. For example, in Example 2, a non-aqueous electrolyte and a lithium secondary battery were manufactured by using the compound represented by Formula 1-1, which was different from that of Example 1, as the first additive, and using the compound represented by Formula 2-3, which was the same as that of Example 1, as the second additive.

**Example 3**

A non-aqueous electrolyte and a lithium secondary battery were manufactured in the same manner as Example 1 with the exception that, as the second additive, a compound represented by Formula 2-1 instead of the compound represented by Formula 2-3 was added to the non-aqueous electrolyte in an amount of 0.5% by weight. For example, in Example 3, a non-aqueous electrolyte and a lithium secondary battery were manufactured by using the compound represented by Formula 1-4 as the first additive in the same manner as in Example 1, and using the compound represented by Formula 2-1, which was different from that of Example 1, as the second additive.

**Example 4**

A non-aqueous electrolyte and a lithium secondary battery were manufactured in the same manner as Example 1 with the exception that the first additive was added to the non-aqueous electrolyte in an amount of 0.1% by weight instead of 0.5% by weight. For example, in Example 4, a non-aqueous electrolyte and a lithium secondary battery were manufactured by using the compound represented by Formula 1-4 as the first additive and using the compound represented by Formula 2-3 as the second additive in the same manner as Example 1, while adding the first additive in the amount of 0.1% by weight which is different from that of Example 1.

**Example 5**

A non-aqueous electrolyte and a lithium secondary battery were manufactured in the same manner as Example 1 with the exception that the first additive was added to the non-aqueous electrolyte in an amount of 2% by weight instead of 0.5% by weight. For example, in Example 5, a non-aqueous electrolyte and a lithium secondary battery were manufactured

by using the compound represented by Formula 1-4 as the first additive and using the compound represented by Formula 2-3 as the second additive in the same manner as Example 1, while adding the first additive in the amount of 2% by weight which is different from that of Example 1.

**Example 6**

A non-aqueous electrolyte and a lithium secondary battery were manufactured in the same manner as Example 1 with the exception that the second additive was added to the non-aqueous electrolyte in an amount of 0.1% by weight instead of 0.5% by weight. For example, in Example 6, a non-aqueous electrolyte and a lithium secondary battery were manufactured by using the compound represented by Formula 1-4 as the first additive and using the compound represented by Formula 2-3 as the second additive in the same manner as Example 1, while adding the second additive in the amount of 0.1% by weight which is different from that of Example 1.

**Example 7**

A non-aqueous electrolyte and a lithium secondary battery were manufactured in the same manner as Example 1 with the exception that the second additive was added to the non-aqueous electrolyte in an amount of 2% by weight instead of 0.5% by weight. For example, in Example 7, a non-aqueous electrolyte and a lithium secondary battery were manufactured by using the compound represented by Formula 1-4 as the first additive and using the compound represented by Formula 2-3 as the second additive in the same manner as Example 1, while adding the second additive in the amount of 2% by weight which is different from that of Example 1.

**Example 8**

A non-aqueous electrolyte and a lithium secondary battery were manufactured in the same manner as Example 1 with the exception that, as the first additive, a compound represented by Formula 1-2 instead of the compound represented by Formula 1-4 was added to the non-aqueous electrolyte in an amount of 0.5% by weight. For example in Example 8, a non-aqueous electrolyte and a lithium secondary battery were manufactured by using the compound represented by Formula 1-2 which was different from that of Example 1, as the first additive, and using the compound represented by Formula 2-3 which was the same as that of Example 1, as the second additive.

**Example 9**

A non-aqueous electrolyte and a lithium secondary battery were manufactured in the same manner as Example 1 with the exception that, as the first additive, a compound represented by Formula 1-3 instead of the compound represented by Formula 1-4 was added to the non-aqueous electrolyte in an amount of 0.5% by weight. For example, in Example 9, a non-aqueous electrolyte and a lithium secondary battery were manufactured by using the compound represented by Formula 1-3 which was different from that of Example 1, as the first additive, and using the compound represented by Formula 2-3 which was the same as that of Example 1, as the second additive.

**Example 10**

A non-aqueous electrolyte and a lithium secondary battery were manufactured in the same manner as Example 1 with the exception that, as the first additive, a compound represented by Formula 1-8 instead of the compound represented by Formula 1-4 was added to the non-aqueous electrolyte in an amount of 0.5% by weight. For example, in Example 10, a non-aqueous electrolyte and a lithium secondary battery were manufactured by using the compound represented by Formula 1-8 which was different from that of Example 1, as the first additive, and using the compound represented by Formula 2-3 which was the same as that of Example 1, as the second additive.

**Example 11**

A non-aqueous electrolyte and a lithium secondary battery were manufactured in the same manner as Example 1 with the exception that, as the second additive, a compound represented by Formula 2-4 instead of the compound represented by Formula 2-3, was added to the non-aqueous electrolyte in an amount of 0.5% by weight. For example, in Example 11, a non-aqueous electrolyte and a lithium secondary battery were manufactured by using, as the first additive, the compound represented by Formula 2-3 in the same manner as in Example 1, and using the compound represented by Formula 2-4, which was different from that of Example 1, as the second additive.

**Example 12**

A non-aqueous electrolyte and a lithium secondary battery were manufactured in the same manner as Example 1 with the exception that, as the second additive, a compound represented by Formula 2-5 instead of the compound represented by Formula 2-3, was added to the non-aqueous electrolyte in an amount of 0.5% by weight. For example, in Example 12, a non-aqueous electrolyte and a lithium secondary battery were manufactured by using, as the first additive, the compound represented by Formula 2-3 in the same manner as in Example 1, and using the compound represented by Formula 2-5 which was different from that of Example 1, as the second additive.

**Example 13**

A non-aqueous electrolyte and a lithium secondary battery were manufactured in the same manner as Example 1 with the exception that, as the second additive, a compound represented by Formula 2-13 instead of the compound represented by Formula 2-3, was added to the non-aqueous electrolyte in an amount of 0.5% by weight. For example, in Example 13, a non-aqueous electrolyte and a lithium secondary battery were manufactured by using, as the first additive, the compound represented by Formula 2-3 in the same manner as in Example 1, and using the compound represented by Formula 2-13 which was different from that of Example 1, as the second additive.

**Comparative Example 1**

A non-aqueous electrolyte and a lithium secondary battery were manufactured in the same manner as Example 1 with the exception that the first and second additives were not added. For example, in Comparative Example 1, a non-aqueous electrolyte and a lithium secondary battery were manufactured without using the additives added in Example 1.

**Comparative Example 2**

A non-aqueous electrolyte and a lithium secondary battery was manufactured in the same manner as in Example 1 with the exception that the second additive was not added. For example, in Comparative Example 2, a non-aqueous electrolyte and a lithium secondary battery were manufactured by using the compound represented by Formula 2-3 in the same manner as Example 1, as the first additive, without using the second additive.

**Comparative Example 3**

A non-aqueous electrolyte and a lithium secondary battery were manufactured in the same manner as in Example 1, with the exception that the first additive was not added to the non-aqueous electrolyte. For example, in Comparative Example 3, a non-aqueous electrolyte and a lithium secondary battery were manufactured by using the second additive, without using the first additive as in Example 1.

**<u>Experimental Examples</u>**

**Experimental Example 1: High-Temperature Cycle Performance Evaluation**

The lithium secondary batteries of Examples 1 to 13 and Comparative Examples 1 to 3 manufactured above were charged to 4.2 V and 0.05 C under conditions of constant current/constant voltage (CC/CV) and 0.33 C at 45 °C and discharged to 3.0 V under conditions of constant current (CC) and 0.33 C for one cycle by using an electrochemical charging/discharging device, and the charging and discharging of the lithium secondary batteries were performed for 200 cycles.

A capacity retention rate was calculated using the equation below, and results thereof were shown in Table 1 below.

$$\text{Capacity Retention Rate (\%)} = \{(\text{Discharge Capacity after 200 cycles})/(\text{Discharge Capacity after 1 cycle})\} \times 100$$

**Experimental Example 2: Evaluation of High Temperature Storage Performance**

Initial charging and discharging of the lithium secondary batteries of Examples 1 to 13 and Comparative Examples 1 to 3 manufactured above was performed by charging to 4.2 V and 0.05 C under conditions of CC/CV and 0.33 C at 25 °C and then, discharging to 3.0 V under conditions of constant current (CC) and 0.33 C. Thereafter, the lithium secondary batteries were charged to 4.2 V and 0.05 C under conditions of CC/CV and 0.33 C at 25 °C, and then stored at 60

°C for 8 weeks.

After storage for 8 weeks, the lithium secondary batteries were charged to 4.2 V and 0.05 C under conditions of 0.33 C at 25 °C and discharged to 3.0 V under conditions of 0.33 C to measure capacity during discharging.

A capacity retention rate was calculated according to the equation below, and results thereof were shown in Table 1 below.

Capacity Retention Rate (%) = (Discharge Capacity after 8 weeks of storage/Initial Discharge Capacity) $\times$ 100

[Table 1]

| | Experimental Example 1: Capacity Retention Rate (%) | Experimental Example 2: Capacity Retention Rate (%) |
|---|---|---|
| Example 1 | 94.8 | 95.8 |
| Example 2 | 88.3 | 89.4 |
| Example 3 | 90.1 | 92.4 |
| Example 4 | 91.9 | 92.1 |
| Example 5 | 90.6 | 91.3 |
| Example 6 | 89.7 | 90.7 |
| Example 7 | 90.2 | 92.6 |
| Example 8 | 91.8 | 91.8 |
| Example 9 | 93.0 | 92.9 |
| Example 10 | 87.5 | 88.4 |
| Example 11 | 88.2 | 89.0 |
| Example 12 | 86.3 | 87.1 |
| Example 13 | 83.8 | 84.6 |
| Comparative Example 1 | 72.2 | 77.6 |
| Comparative Example 2 | 74.8 | 80.9 |
| Comparative Example 3 | 73.9 | 79.2 |

Referring to Table 1, it could be confirmed that each of the lithium secondary batteries of Examples 1 to 13 manufactured using the non-aqueous electrolytes according to the present disclosure had a capacity retention rate of 80% or more after 200 cycles and after storage for 8 weeks, whereas in the case of Comparative Examples 1 to 3 where the present disclosure was not applied, the capacity retention rate under the same conditions was 80% or less. Accordingly, it could be confirmed that the lithium secondary batteries of Examples 1 to 13 to which the present disclosure was applied exhibited remarkably excellent levels of capacity retention rates during high temperature cycle charging and discharging and high temperature storage, compared to Comparative Examples 1 to 3. In other words, it could be confirmed that the lifespan performance and storage performance of the lithium secondary battery including the non-aqueous electrolyte according to the present disclosure containing the above-described first additive and second additive were improved, in particular, the lifespan performance and storage performance thereof at high temperatures were improved.

Although the present disclosure has been described above with reference to embodiments, those skilled in the art or persons having ordinary knowledge in the relevant technical field will understand that various embodiments of the present disclosure have been described herein for purposes of illustration, and that various modifications and changes may be made without departing from the scope and spirit of the present disclosure. Accordingly, the various embodiments disclosed herein are not intended to be limiting, with the true scope and spirit being indicated by the following claims.

## Claims

**1.** A non-aqueous electrolyte comprising:

lithium salts;
an organic solvent; and
an additive including a first additive and a second additive,
wherein the first additive includes a compound represented by following Formula 1,

[Formula 1]

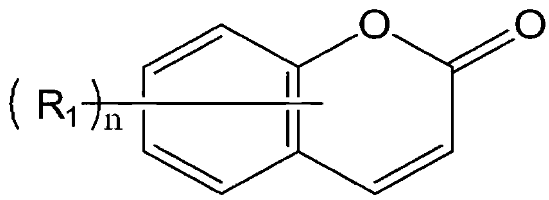

where $R_1$ includes halogen, a nitrile group, a propargyl group, an ester group, an ether group, a ketone group, a carboxyl group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and where n is an integer of 0 to 6,
wherein the second additive includes a compound represented by following Formula 2:

[Formula 2]

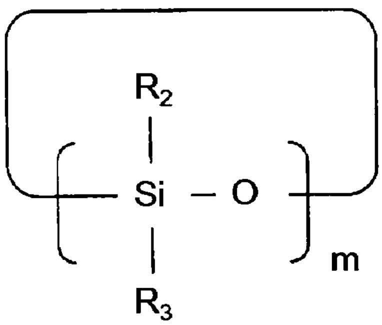

where $R_2$ and $R_3$ are independently selected from among an alkyl group having 1 to 10 carbon atoms, an alkenyl group having 2 to 10 carbon atoms, an alkynyl group having 2 to 10 carbon atoms, and a substituent represented by following Formula 3, and at least one of $R_2$ and $R_3$ is selected from among an alkenyl group having 2 to 10 carbon atoms, an alkynyl group having 2 to 10 carbon atoms, and a substituent represented by the following Formula 3, and where m is an integer of 3 to 10,

[Formula 3]

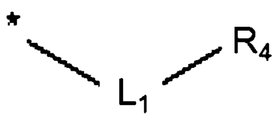

where $L_1$ is a direct bond, an alkylene group having 1 to 10 carbon atoms, an ester group, a sulfone group, a sulfonate group, a sulfate group, or a combination of two or more thereof, $R_4$ is an alkoxy group having 1 to 10 carbons, which is substituted with at least one fluorine atom, and * is a binding site.

**2.** The non-aqueous electrolyte according to claim 1, wherein the compound represented by Formula 1 includes at least one compound selected from the group consisting of a compound represented by Formula 1-A and a compound represented by Formula 1-B:

[Formula 1-A]

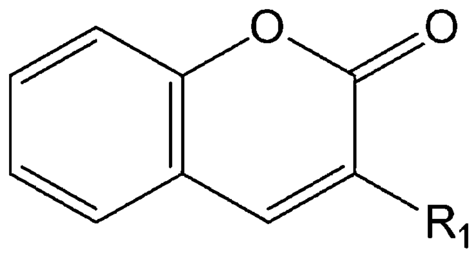

[Formula 1-B]

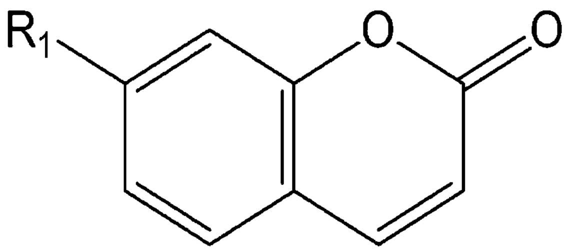

where $R_1$ is as defined in Formula 1.

**3.** The non-aqueous electrolyte according to claim 1, wherein the compound represented by Formula 1 includes at least one compound selected from the group consisting of compounds represented by following Formula 1-1 to Formula 1-9:

[Formula 1-1]

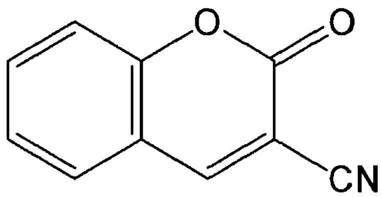

[Formula 1-2]

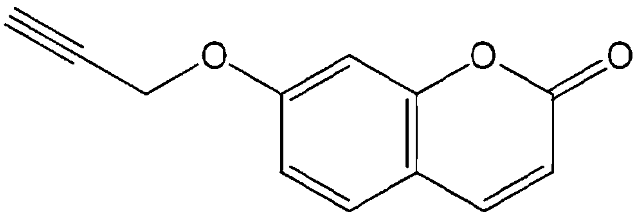

[Formula 1-3]

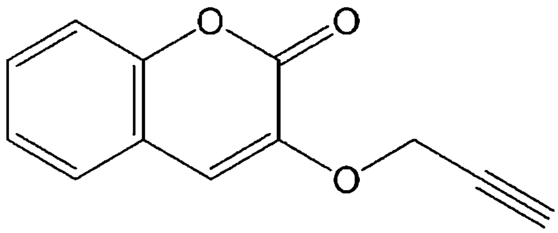

[Formula 1-4]

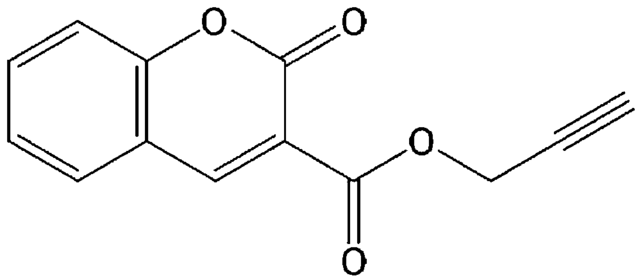

[Formula 1-5]

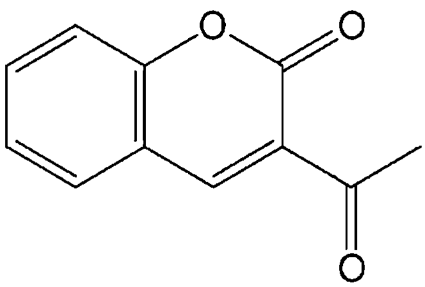

[Formula 1-6]

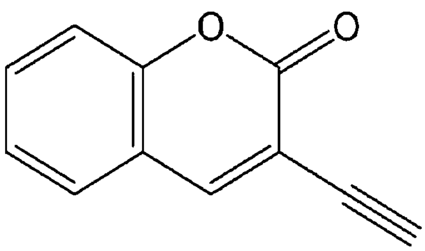

[Formula 1-7]

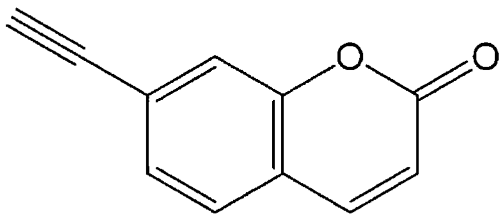

[Formula 1-8]

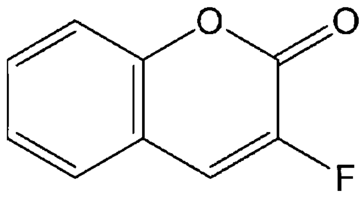

[Formula 1-9]

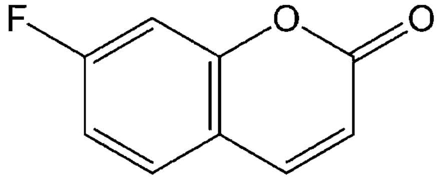

.

4. The non-aqueous electrolyte according to claim 1, wherein the first additive is included in an amount of 0.01% to 10% by weight based on a weight of the non-aqueous electrolyte.

5. The non-aqueous electrolyte according to claim 1, wherein in Formula 2, $R_2$ is an alkyl group having 1 to 10 carbon atoms, and $R_3$ is selected from among an alkenyl group having 2 to 10 carbon atoms and an alkynyl group having 2 to 10 carbon atoms.

6. The non-aqueous electrolyte according to claim 1, wherein the compound represented by Formula 2 includes at least one compound selected from the group consisting of compounds represented by following Formula 2-1 to Formula 2-16:

[Formula 2-1]

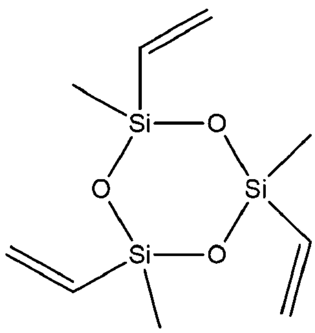

[Formula 2-2]

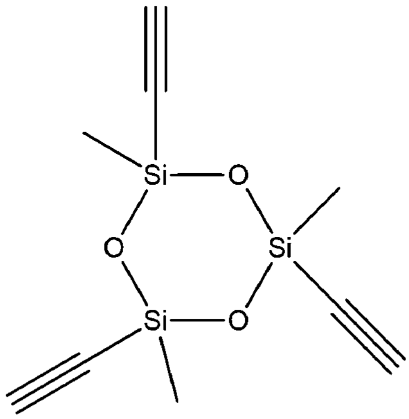

[Formula 2-3]

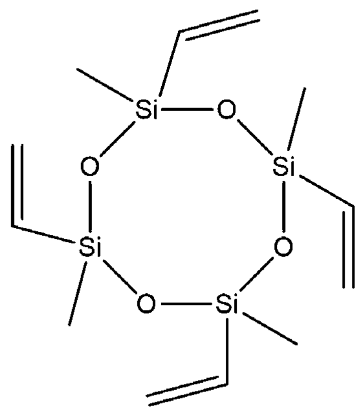

[Formula 2-4]

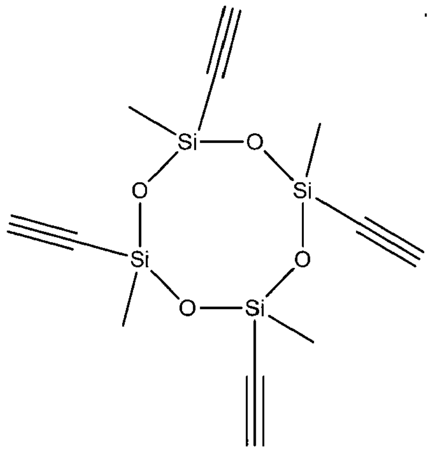

[Formula 2-5]

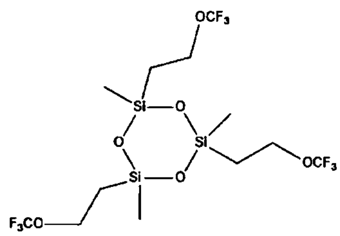

[Formula 2-6]

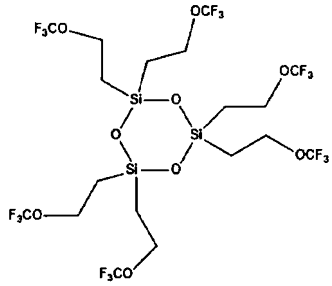

[Formula 2-7]

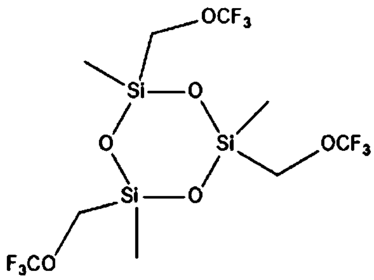

[Formula 2-8]

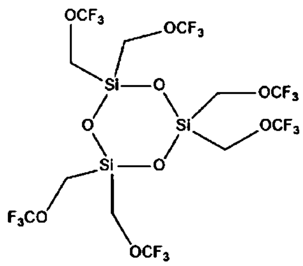

[Formula 2-9]

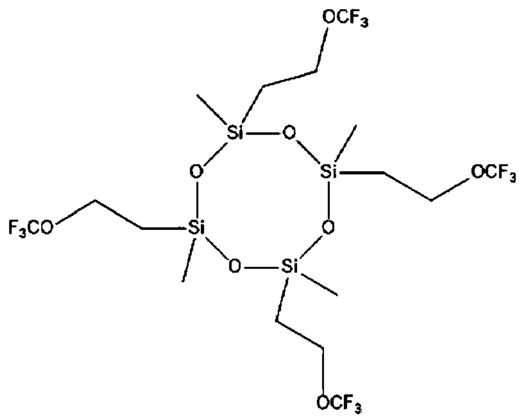

[Formula 2-10]

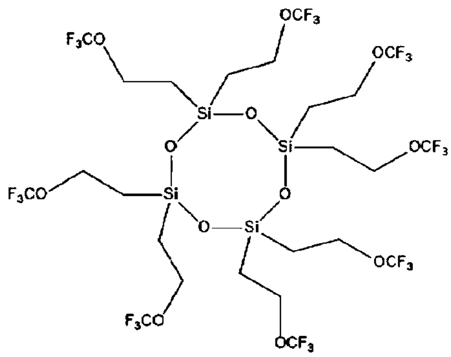

[Formula 2-11]

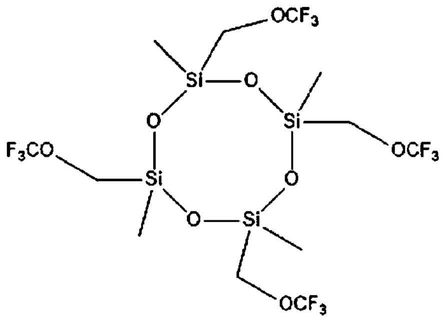

[Formula 2-12]

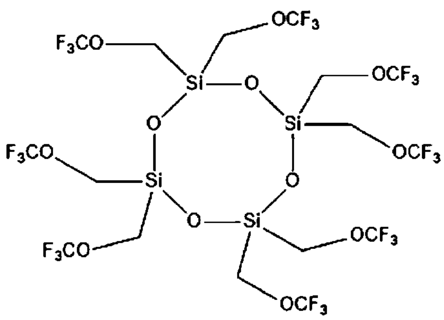

[Formula 2-13]

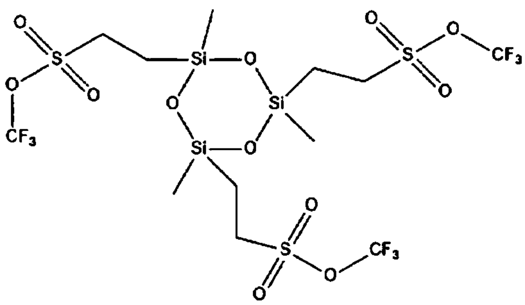

[Formula 2-14]

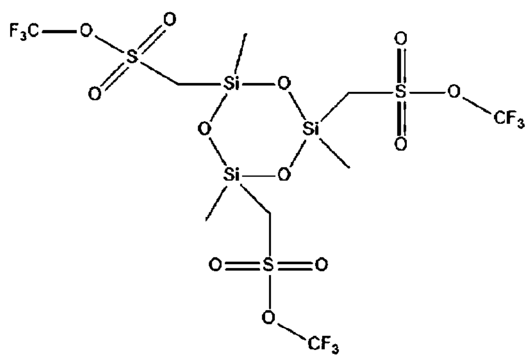

[Formula 2-15]

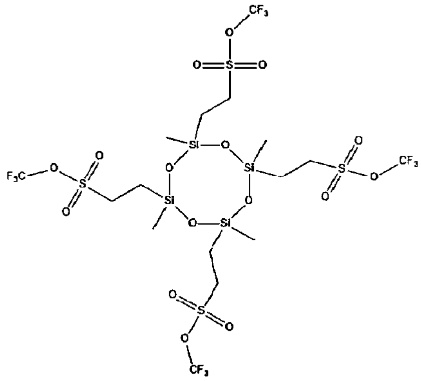

[Formula 2-16]

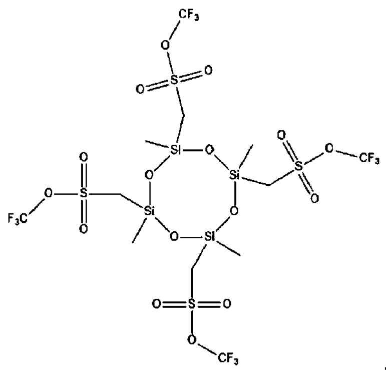

.

**7.** The non-aqueous electrolyte according to claim 1, wherein the second additive is included in an amount of 0.01% to 10% by weight based on the weight of the non-aqueous electrolyte.

**8.** The non-aqueous electrolyte according to claim 1, wherein a weight ratio of the first additive and the second additive is 1:99 to 99:1.

**9.** The non-aqueous electrolyte according to claim 1, wherein the lithium salts include at least one selected from the group consisting of LiCl, LiBr, LiI, $LiBF_4$, $LiClO_4$, $LiAlO_4$, $LiAlCl_4$, $LiPF_6$, $LiSbF_6$, $LiAsF_6$, $LiB_{10}Cl_{10}$, LiBOB($LiB(C_2O_4)_2$), $LiCF_3SO_3$, LiFSI($LiN(SO_2F)_2$), $LiCH_3SO_3$, $LiCF_3CO_2$, $LiCH_3CO_2$, and LiBETI($LiN(SO_2CF_2CF_3)_2$).

**10.** The non-aqueous electrolyte according to claim 1, wherein the lithium salts are included in the non-aqueous electrolyte at a molar concentration of 0.5 M to 5.0 M.

**11.** The non-aqueous electrolyte according to claim 1, wherein the organic solvent includes at least one selected from the group consisting of a cyclic carbonate-based organic solvent, a linear carbonate-based organic solvent, a linear ester-based organic solvent, and a cyclic ester-based organic solvent.

**12.** The non-aqueous electrolyte according to claim 1, wherein the organic solvent includes a cyclic carbonate-based organic solvent and a linear carbonate-based organic solvent,

wherein the cyclic carbonate-based organic solvent includes fluoroethylene carbonate, and
wherein the linear carbonate-based organic solvent includes diethyl carbonate.

**13.** A lithium secondary battery comprising:

a negative electrode;
a positive electrode facing the negative electrode;
a separator interposed between the negative electrode and the positive electrode; and
a non-aqueous electrolyte comprising:

lithium salts;
an organic solvent; and
an additive including a first additive and a second additive,
wherein the first additive includes a compound represented by following Formula 1,

[Formula 1]

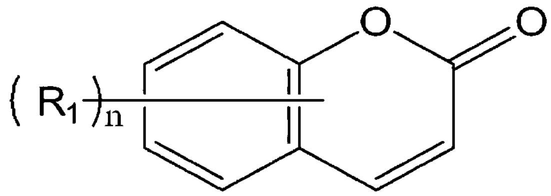

where $R_1$ includes halogen, a nitrile group, a propargyl group, an ester group, an ether group, a ketone group, a carboxyl group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and where n is an integer of 0 to 6, and
wherein the second additive includes a compound represented by following Formula 2:

[Formula 2]

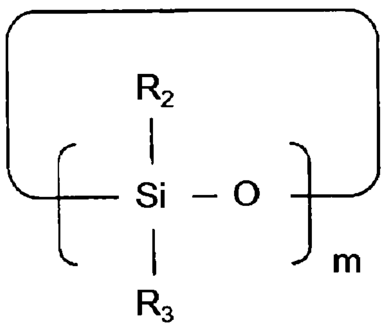

where $R_2$ and $R_3$ are independently selected from among an alkyl group having 1 to 10 carbon atoms, an alkenyl group having 2 to 10 carbon atoms, an alkynyl group having 2 to 10 carbon atoms, and a substituent represented by following Formula 3, and at least one of $R_2$ and $R_3$ is selected from among an alkenyl group having 2 to 10 carbon atoms, an alkynyl group having 2 to 10 carbon atoms, and a substituent represented by the following

Formula 3, and where m is an integer of 3 to 10,

[Formula 3]

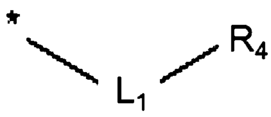

where $L_1$ is a direct bond, an alkylene group having 1 to 10 carbon atoms, an ester group, a sulfone group, a sulfonate group, a sulfate group, or a combination of two or more thereof, $R_4$ is an alkoxy group having 1 to 10 carbons, which is substituted with at least one fluorine atom, and * is a binding site.

**14.** The lithium secondary battery according to claim 13, wherein the negative electrode includes a negative electrode active material comprising a silicon-based active material.

**15.** A preparation method of a non-aqueous electrolyte, the preparation method comprising:

adding lithium salts and an additive to an organic solvent, the additive comprising a first additive and a second additive,
wherein the first additive includes a compound represented by following Formula 1,

[Formula 1]

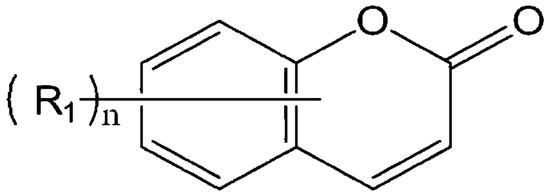

where $R_1$ includes halogen, a nitrile group, a propargyl group, an ester group, an ether group, a ketone group, a carboxyl group, a substituted or unsubstituted alkyl group, a substituted or unsubstituted alkenyl group, a substituted or unsubstituted alkynyl group, a substituted or unsubstituted alkoxy group, a boron group, a borate group, an isocyanate group, an isothiocyanate group, a silyl group, a siloxane group, a sulfone group, a sulfonate group, a sulfate group, or a combination of two or more thereof, and where n is an integer of 0 to 6, and
wherein the second additive includes a compound represented by following Formula 2:

[Formula 2]

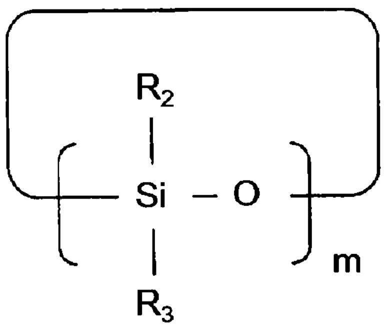

where $R_2$ and $R_3$ are independently selected from among an alkyl group having 1 to 10 carbon atoms, an alkenyl group having 2 to 10 carbon atoms, an alkynyl group having 2 to 10 carbon atoms, and a substituent represented by following Formula 3, and at least one of $R_2$ and $R_3$ is selected from among an alkenyl group having 2 to 10 carbon atoms, an alkynyl group having 2 to 10 carbon atoms, and a substituent represented by the following Formula 3, and where m is an integer of 3 to 10,

[Formula 3]

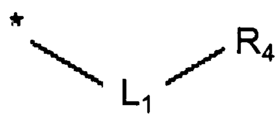

where $L_1$ is a direct bond, an alkylene group having 1 to 10 carbon atoms, an ester group, a sulfone group, a sulfonate group, a sulfate group, or a combination of two or more thereof, $R_4$ is an alkoxy group having 1 to 10 carbons, which is substituted with at least one fluorine atom, and * is a binding site.

**16.** The preparation method according to claim 15, wherein the compound represented by Formula 1 includes at least one selected from the group consisting of a compound represented by following Formula 1-A and a compound represented by following Formula 1-B:

[Formula 1-A]

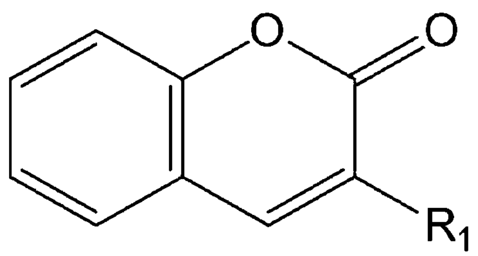

[Formula 1-B]

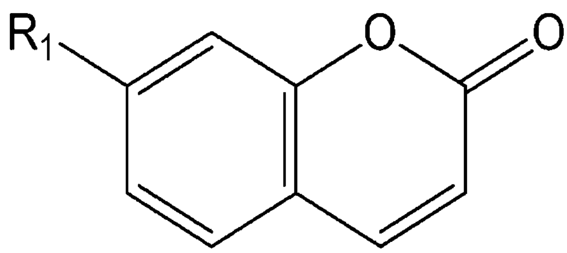

where $R_1$ is as defined in Formula 1.

**17.** The preparation method according to claim 15, wherein the compound represented by Formula 1 includes at least one selected from the group consisting of compounds represented by following Formula 1-1 to Formula 1-9:

[Formula 1-1]

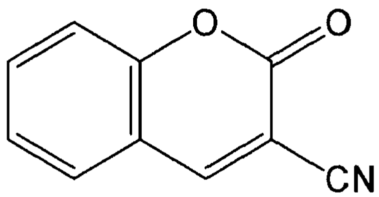

[Formula 1-2]

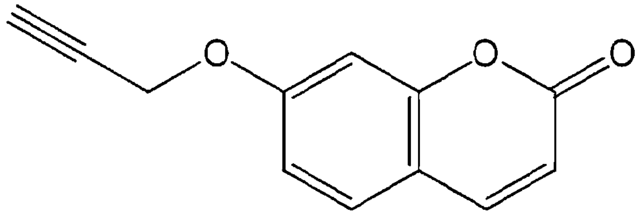

[Formula 1-3]

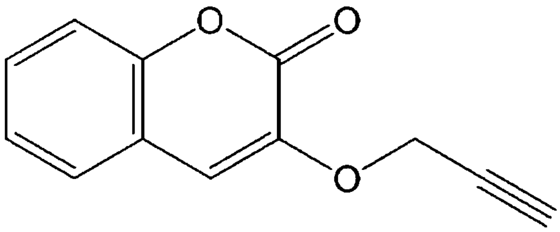

[Formula 1-4]

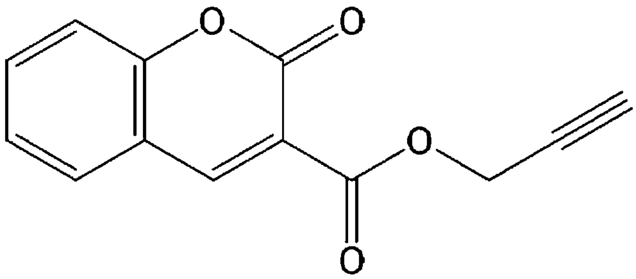

[Formula 1-5]

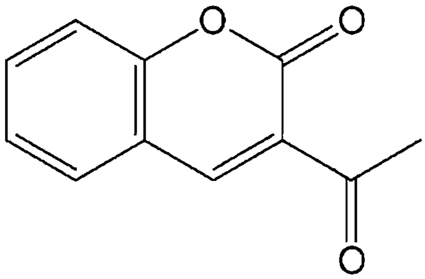

[Formula 1-6]

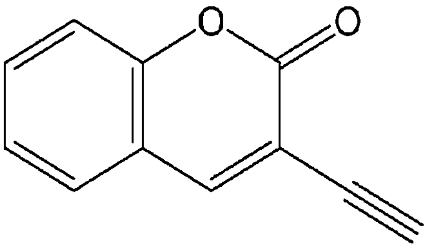

[Formula 1-7]

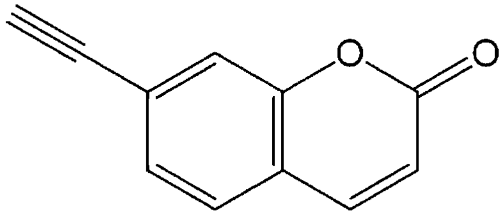

[Formula 1-8]

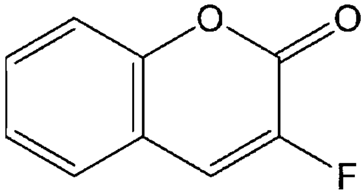

[Formula 1-9]

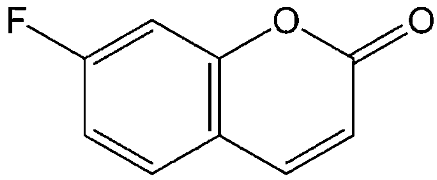

18. The preparation method according to claim 15, wherein the first additive is included in an amount of 0.01% to 10% by weight based on a weight of the non-aqueous electrolyte.

19. The preparation method according to claim 15, wherein in Formula 2, $R_2$ is selected from an alkyl group having 1 to 10 carbon atoms, and $R_3$ is selected from among an alkenyl group having 2 to 10 carbon atoms and an alkynyl group having 2 to 10 carbon atoms.

20. The preparation method according to claim 15, wherein the compound represented by Formula 2 includes at least one selected from the group consisting of compounds represented by following Formula 2-1 to Formula 2-16:

[Formula 2-1]

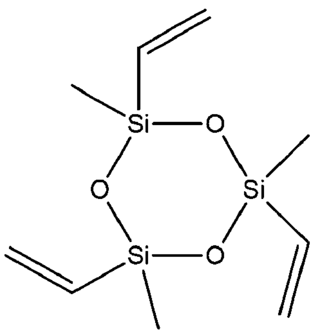

[Formula 2-2]

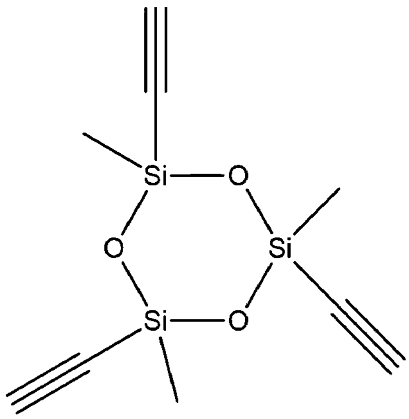

[Formula 2-3]

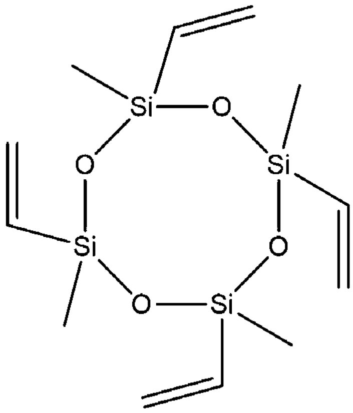

[Formula 2-4]

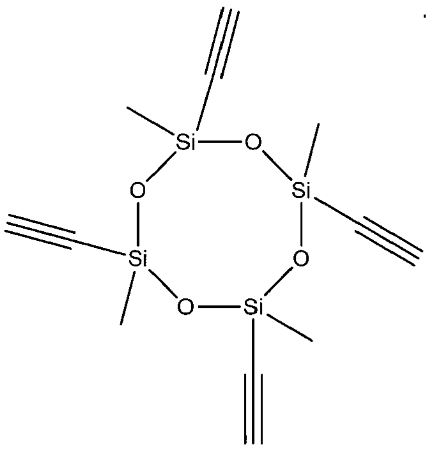

[Formula 2-5]

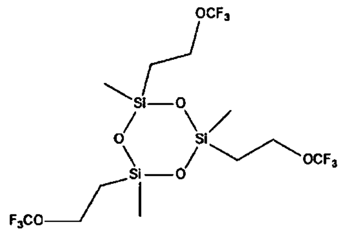

[Formula 2-6]

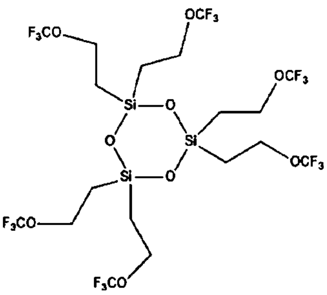

[Formula 2-7]

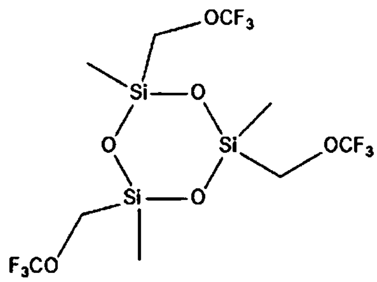

[Formula 2-8]

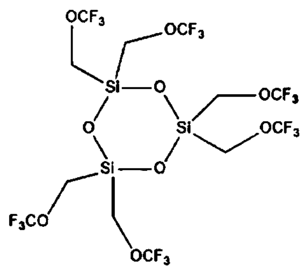

[Formula 2-9]

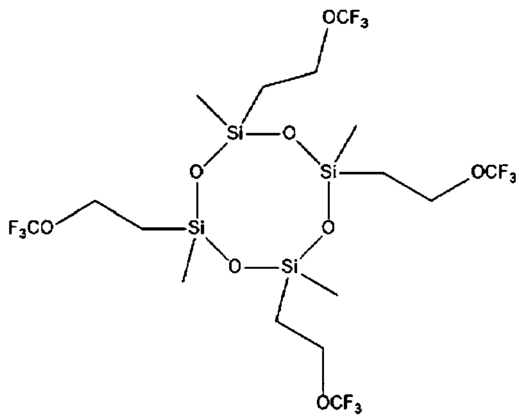

[Formula 2-10]

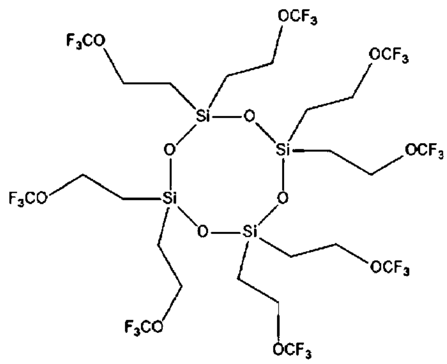

[Formula 2-11]

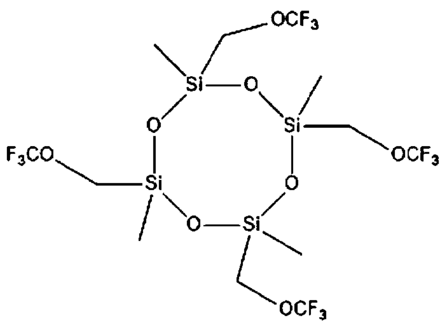

[Formula 2-12]

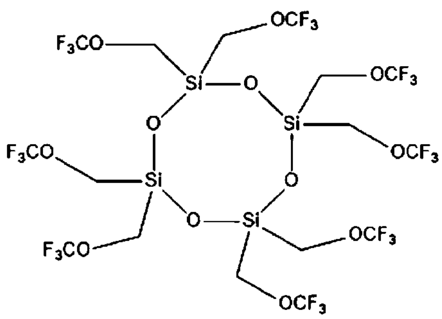

[Formula 2-13]

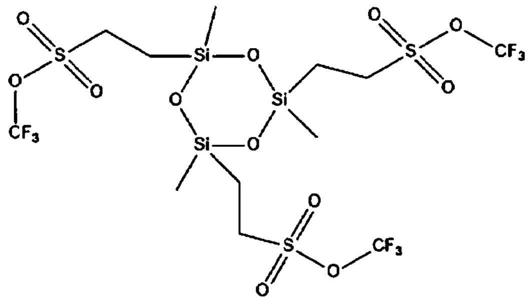

[Formula 2-14]

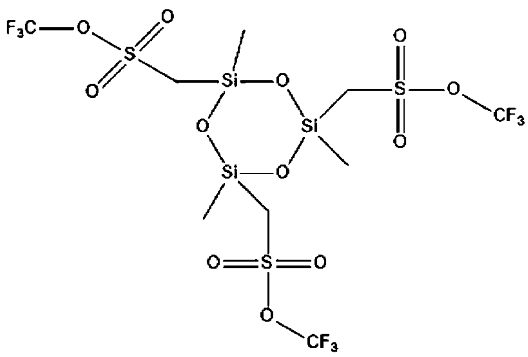

[Formula 2-15]

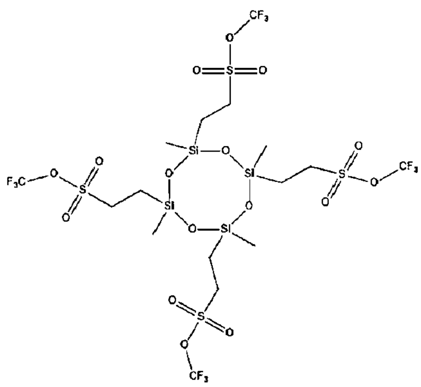

[Formula 2-16]

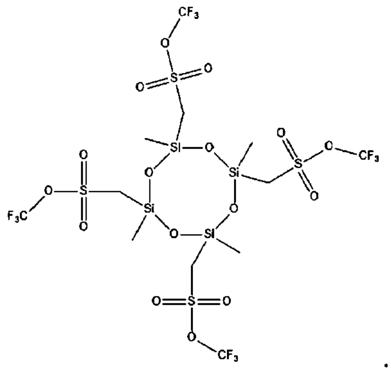

## INTERNATIONAL SEARCH REPORT

International application No.
**PCT/KR2024/004504**

**A. CLASSIFICATION OF SUBJECT MATTER**

**H01M 10/0567**(2010.01)i; **H01M 10/0568**(2010.01)i; **H01M 10/0569**(2010.01)i; **H01M 10/052**(2010.01)i; **H01M 4/38**(2006.01)i; **H01M 4/48**(2010.01)i; **H01M 4/134**(2010.01)i

According to International Patent Classification (IPC) or to both national classification and IPC

**B. FIELDS SEARCHED**

Minimum documentation searched (classification system followed by classification symbols)

H01M 10/0567(2010.01); H01M 10/052(2010.01); H01M 10/0525(2010.01); H01M 10/40(2006.01); H01M 10/42(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 리튬 이차전지(lithium secondary battery), 비수전해질 (non-aqueous electrolyte), 첨가제(additive), 쿠마린(coumarin), 환형 실록산계 화합물(cyclic siloxane-based compound)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2023-0022133 A (LG ENERGY SOLUTION, LTD.) 14 February 2023 (2023-02-14)<br>See claims 1 and 5-11; and paragraphs [0068], [0081], [0089], [0097] and [0098]. | 1-20 |
| Y | US 2020-0203764 A1 (ENEVATE CORPORATION) 25 June 2020 (2020-06-25)<br>See claims 1 and 5; and paragraphs [0007], [0068], [0086], [0091]-[0093] and [0099]. | 1-20 |
| Y | KR 10-2021-0060330 A (LG CHEM, LTD.) 26 May 2021 (2021-05-26)<br>See claims 1 and 6. | 3,17 |
| A | CN 102569889 A (SHENZHEN CAPCHEM TECHNOLOGY CO., LTD.) 11 July 2012 (2012-07-11)<br>See entire document. | 1-20 |
| A | JP 2004-071458 A (MITSUBISHI CHEMICALS CORP.) 04 March 2004 (2004-03-04)<br>See entire document. | 1-20 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 July 2024** | **17 July 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2024/004504**

| Patent document cited in search report | Publication date (day/month/year) | Patent family member(s) | Publication date (day/month/year) |
|---|---|---|---|
| KR 10-2023-0022133 A | 14 February 2023 | CA 3217209 A1 | 09 February 2023 |
| | | CN 117121255 A | 24 November 2023 |
| | | EP 4318712 A1 | 07 February 2024 |
| | | JP 2024-515138 A | 04 April 2024 |
| | | KR 10-2636089 B1 | 14 February 2024 |
| | | WO 2023-014174 A1 | 09 February 2023 |
| US 2020-0203764 A1 | 25 June 2020 | US 11165099 B2 | 02 November 2021 |
| | | US 2022-0052380 A1 | 17 February 2022 |
| | | WO 2020-132072 A1 | 25 June 2020 |
| KR 10-2021-0060330 A | 26 May 2021 | CN 113767502 A | 07 December 2021 |
| | | EP 3951990 A1 | 09 February 2022 |
| | | EP 3951990 B1 | 15 May 2024 |
| | | JP 2022-534525 A | 01 August 2022 |
| | | JP 7301449 B2 | 03 July 2023 |
| | | KR 10-2633527 B1 | 06 February 2024 |
| | | US 2022-0209299 A1 | 30 June 2022 |
| | | WO 2021-101174 A1 | 27 May 2021 |
| CN 102569889 A | 11 July 2012 | None | |
| JP 2004-071458 A | 04 March 2004 | JP 4154951 B2 | 24 September 2008 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230046365
- KR 1020230183781